# EUROPEAN PATENT APPLICATION

(11) **EP 4 617 830 A1**
(43) Date of publication of application: **17.09.2025**
(21) Application number: 23909528.4
(22) Date of filing: 25.10.2023
(51) Int. Cl.: G06F 3/01

(54) **CONTROL METHOD BASED ON HUMAN EYE DETECTION, AND ELECTRONIC DEVICE**

(30) Priority: 30.12.2022 CN 202211736915
(71) Applicant: Honor Device Co., Ltd., Shenzhen, Guangdong 518040 (CN)
(72) Inventor: TONG, Chen, Shenzhen, Guangdong 518040 (CN); YAO, Xingting, Shenzhen, Guangdong 518040 (CN)
(74) Representative: MERH-IP Matias Erny Reichl Hoffmann Patentanwälte PartG mbB
(86) International application number: PCT/CN2023/126438
(87) International publication number: WO 2024/139594

(57) **Abstract**

Embodiments of this application provide a human eye detection-based control method and an electronic device, and are applied to the field of electronic technologies. In the method, when triggering detection for a human eye gaze location, a swing interaction framework registers a human eye sensing fence with a smart sensing service; the smart sensing service sends a registration request to a camera service to obtain the human eye gaze location; the smart sensing service determines human eye gaze event information based on the human eye gaze location and the human eye sensing fence, and sends the human eye gaze event information to the swing interaction framework; and when the human eye gaze event information is a gaze success event, the swing interaction framework triggers any one of the following operations: expanding a banner notification corresponding to a Messages application, displaying detailed information of a banner notification corresponding to a third-party communication application, switching between videos corresponding to a short video application, and flipping a reading page corresponding to an eBook application. In this way, cumbersomeness of a user operation can be reduced and user experience can be improved.

## Description

This application claims priority to Chinese Patent Application No. 202211736915.X, filed with the China National Intellectual Property Administration on December 30, 2022 and entitled "HUMAN EYE DETECTION-BASED CONTROL METHOD AND ELECTRONIC DEVICE", which is incorporated herein by reference in its entirety.

### TECHNICAL FIELD

This application relates to the field of electronic technologies, and in particular, to a human eye detection-based control method and an electronic device.

### BACKGROUND

With continuous development of electronic technologies, electronic devices such as a mobile phone and a tablet computer have become common tools in people's life and work. To meet various use requirements of users, manufacturers of the electronic devices may preset a specific quantity of system applications in the electronic devices, for example, a Messages application, and the users may also download and install third-party applications on the electronic devices, such as a third-party communication application, a short video application, and an eBook application.

However, during use of the electronic devices, the users often need to manually perform a tap operation, a flicking operation, or the like on the electronic devices, to implement the following functions: expanding a banner notification corresponding to the Messages application, displaying detailed information of a banner notification corresponding to the third-party communication application, performing video switching for the short video application, and flipping a reading page corresponding to the eBook application, resulting in tedious user operations.

### SUMMARY

Embodiments of this application provide a human eye detection-based control method and an electronic device. Based on human eye tracking, operations such as expanding a banner notification corresponding to a Messages application, displaying detailed information of a banner notification corresponding to a third-party communication application, performing video switching for a short video application, and flipping a reading page corresponding to an eBook application are automatically performed, thereby reducing cumbersomeness of a user operation.

According to a first aspect, an embodiment of this application provides a human eye detection-based control method. The control method is applied to an electronic device. The electronic device includes a camera service, a swing interaction framework, and a smart sensing service. The method includes: When triggering detection for a human eye gaze location, the swing interaction framework registers a human eye sensing fence with the smart sensing service; the smart sensing service sends a registration request to the camera service, where the registration request is used to start the detection for the human eye gaze location; the camera service sends the obtained human eye gaze location to the smart sensing service in response to the registration request; the smart sensing service determines human eye gaze event information based on the human eye gaze location and the human eye sensing fence; the smart sensing service sends the human eye gaze event information to the swing interaction framework; and the swing interaction framework triggers a corresponding target operation when the human eye gaze event information is a gaze success event. The target operation includes any one of the following: expanding a banner notification corresponding to a Messages application, displaying detailed information of a banner notification corresponding to a third-party communication application, switching between videos corresponding to a short video application, and flipping a reading page corresponding to an eBook application.

In this way, the human eye gaze event information is determined based on the human eye gaze location and the human eye sensing fence, and when the human eye gaze event information is the gaze success event, operations such as expanding the banner notification corresponding to the Messages application, displaying the detailed information of the banner notification corresponding to the third-party communication application, performing video switching for the short video application, and flipping the reading page corresponding to the eBook application are automatically performed, thereby reducing cumbersomeness of a user operation, and improving user experience.

In a possible implementation, the electronic device further includes a system interface application. The triggering detection for a human eye gaze location includes: When the system interface application receives a banner notification corresponding to a Messages application, and the banner notification is an expandable banner notification, the system interface application registers a human eye sensing fence corresponding to the Messages application with the swing interaction framework, to trigger the detection for the human eye gaze location. In this way, the detection for the human eye gaze location can be triggered only for the expandable banner notification, and the detection for the human eye gaze location cannot be triggered for a banner notification that is not expandable, thereby avoiding power consumption caused by registering the human eye sensing fence and obtaining the human eye gaze location in a scenario in which the banner notification is not expandable.

In a possible implementation, before the system interface application registers the human eye sensing fence corresponding to the Messages application with the swing interaction framework, the method further includes: The system interface application determines whether the electronic device supports a human eye detection function; when the electronic device supports the human eye detection function, the system interface application determines whether a human eye detection switch corresponding to the Messages application is enabled; and when the human eye detection switch corresponding to the Messages application is enabled, the system interface application performs the step of registering the human eye sensing fence corresponding to the Messages application with the swing interaction framework. In this way, registration of the human eye sensing fence corresponding to the Messages application can be more precisely controlled based on determining whether the electronic device supports the human eye detection function and determining whether the human eye detection switch corresponding to the Messages application is enabled.

In a possible implementation, that the swing interaction framework triggers a corresponding target operation when the human eye gaze event information is a gaze success event includes: When the human eye gaze event information is a gaze success event, the swing interaction framework determines whether a use scenario of the electronic device belongs to an event response scenario; the swing interaction framework sends the gaze success event to the system interface application when the use scenario of the electronic device belongs to the event response scenario; and the system interface application expands the banner notification corresponding to the Messages application in response to the gaze success event. In this way, the system interface application can automatically expand the banner notification corresponding to the Messages application based on the gaze success event, thereby reducing cumbersomeness of a user operation, and improving user experience.

In a possible implementation, the electronic device further includes a system interface application and a third-party communication application. The triggering detection for a human eye gaze location includes: When the system interface application receives a banner notification corresponding to the third-party communication application, the system interface application registers a human eye sensing fence corresponding to the third-party communication application with the swing interaction framework, to trigger the detection for the human eye gaze location.

In a possible implementation, before the system interface application registers the human eye sensing fence corresponding to the third-party communication application with the swing interaction framework, the method further includes: The system interface application determines whether the electronic device supports a human eye detection function; when the electronic device supports the human eye detection function, the system interface application determines whether a human eye detection switch corresponding to the third-party communication application is enabled; and when the human eye detection switch corresponding to the third-party communication application is enabled, the system interface application performs the step of registering the human eye sensing fence corresponding to the third-party communication application with the swing interaction framework. In this way, registration of the human eye sensing fence corresponding to the third-party communication application can be more precisely controlled based on determining whether the electronic device supports the human eye detection function and determining whether the human eye detection switch corresponding to the third-party communication application is enabled.

In a possible implementation, the electronic device further includes an input manager service. That the swing interaction framework triggers a corresponding target operation when the human eye gaze event information is a gaze success event includes: When the human eye gaze event information is a gaze success event, the swing interaction framework determines whether a use scenario of the electronic device belongs to an event response scenario; when the use scenario of the electronic device belongs to the event response scenario, the swing interaction framework performs mapping in response to the gaze success event, to obtain a first touch event; the swing interaction framework injects the first touch event into the input manager service; the input manager service sends the first touch event to the third-party communication application; and the third-party communication application displays detailed information of the banner notification corresponding to the third-party communication application in response to the first touch event. In this way, the third-party communication application can automatically display the detailed information of the banner notification corresponding to the third-party communication application based on the simulated first touch event, thereby reducing cumbersomeness of a user operation, and improving user experience.

In a possible implementation, the electronic device further includes a window manager service and a short video application. The triggering detection for a human eye gaze location includes: When the window manager service senses that the short video application runs in a foreground, the window manager service sends application information corresponding to the short video application to the swing interaction framework, to trigger the detection for the human eye gaze location.

In a possible implementation, before the swing interaction framework registers the human eye sensing fence with the smart sensing service, the method further includes: The swing interaction framework determines whether the electronic device supports a human eye detection function; when the electronic device supports the human eye detection function, the swing interaction framework determines whether a human eye detection switch corresponding to the short video application is enabled; and when the human eye detection switch corresponding to the short video application is enabled, the swing interaction framework performs the step of registering the human eye sensing fence with the smart sensing service, where the registered human eye sensing fence is a human eye sensing fence corresponding to the short video application. In this way, registration of the human eye sensing fence corresponding to the short video application can be more precisely controlled based on determining whether the electronic device supports the human eye detection function and determining whether the human eye detection switch corresponding to the short video application is enabled.

In a possible implementation, the electronic device further includes an input manager service. That the swing interaction framework triggers a corresponding target operation when the human eye gaze event information is a gaze success event includes: When the human eye gaze event information is a gaze success event, the swing interaction framework determines whether a use scenario of the electronic device belongs to an event response scenario; when the use scenario of the electronic device belongs to the event response scenario, the swing interaction framework performs mapping in response to the gaze success event, to obtain a second touch event; the swing interaction framework injects the second touch event into the input manager service; the input manager service sends the second touch event to the short video application; and the short video application switches a currently played first video to a second video in response to the second touch event. In this way, the short video application can automatically perform video page flipping based on the simulated second touch event, thereby reducing cumbersomeness of a user operation, and improving user experience.

In a possible implementation, the electronic device further includes a window manager service and an eBook application. The triggering detection for a human eye gaze location includes: When the window manager service senses that the eBook application runs in a foreground, the window manager service sends application information corresponding to the eBook application to the swing interaction framework, to trigger the detection for the human eye gaze location.

In a possible implementation, before the swing interaction framework registers the human eye sensing fence with the smart sensing service, the method further includes: The swing interaction framework determines whether the electronic device supports a human eye detection function; when the electronic device supports the human eye detection function, the swing interaction framework determines whether a human eye detection switch corresponding to the eBook application is enabled; and when the human eye detection switch corresponding to the eBook application is enabled, the swing interaction framework performs the step of registering the human eye sensing fence with the smart sensing service, where the registered human eye sensing fence is a human eye sensing fence corresponding to the eBook application. In this way, registration of the human eye sensing fence corresponding to the eBook application can be more precisely controlled based on determining whether the electronic device supports the human eye detection function and determining whether the human eye detection switch corresponding to the eBook application is enabled.

In a possible implementation, the electronic device further includes an input manager service. That the swing interaction framework triggers a corresponding target operation when the human eye gaze event information is a gaze success event includes: When the human eye gaze event information is a gaze success event, the swing interaction framework determines whether a use scenario of the electronic device belongs to an event response scenario; when the use scenario of the electronic device belongs to the event response scenario, the swing interaction framework performs mapping in response to the gaze success event, to obtain a third touch event; the swing interaction framework injects the third touch event into the input manager service; the input manager service sends the third touch event to the eBook application; and the eBook application switches a currently displayed first reading page to a second reading page in response to the third touch event. In this way, the eBook application can automatically perform reading page flipping based on the simulated third touch event, thereby reducing cumbersomeness of a user operation, and improving user experience.

In a possible implementation, the human eye sensing fence includes a first preset region, first preset duration, and second preset duration. That the smart sensing service determines human eye gaze event information based on the human eye gaze location and the human eye sensing fence includes: Within the second preset duration, when the smart sensing service determines that the human eye gaze location is located in the first preset region, and duration in which the human eye gaze location remains in the first preset region reaches the first preset duration, the smart sensing service determines that the human eye gaze event information is the gaze success event. In this way, the human eye gaze event information is determined based on determining whether the human eye gaze location is located in the first preset region and whether the duration in which the human eye gaze location remains in the first preset region reaches the first preset duration, to more precisely control performing of the corresponding target operation.

In a possible implementation, the human eye sensing fence includes a first preset region. After the system interface application expands the banner notification corresponding to the Messages application in response to the gaze success event, the method further includes: When the smart sensing service determines that the human eye gaze location leaves the first preset region, the smart sensing service sends a gaze finish event to the swing interaction framework; the swing interaction framework sends the gaze finish event to the system interface application; and the system interface application collapses the banner notification corresponding to the Messages application in response to the gaze finish event. In this way, after a user checks all message content of the banner notification corresponding to the Messages application, a human eye gaze location of the user may move away from the first preset region, and the electronic device can automatically collapse the banner notification corresponding to the Messages application, thereby reducing cumbersomeness of a user operation, and improving user experience.

In a possible implementation, that the swing interaction framework triggers a corresponding target operation includes: When the swing interaction framework determines that at least two human eye sensing fences are registered, and at least one of the human eye sensing fences is a human eye sensing fence corresponding to the banner notification, the swing interaction framework triggers the corresponding target operation based on priorities of the at least two human eye sensing fences and corresponding human eye gaze event information, where the banner notification is a banner notification corresponding to the Messages application or a banner notification corresponding to the third-party communication application. In this way, when there are at least two human eye sensing fences and at least one of the human eye sensing fences is the human eye sensing fence corresponding to the banner notification, an event that needs to be processed preferentially is determined based on the priorities, to more precisely control a target operation corresponding to the banner notification, a target operation corresponding to the short video application, and a target operation corresponding to the eBook application based on an actual requirement of the user.

In a possible implementation, the priority of the human eye sensing fence corresponding to the banner notification is higher than priority of a human eye sensing fence corresponding to the short video application. That the swing interaction framework triggers the corresponding target operation based on priorities of the at least two human eye sensing fences and corresponding human eye gaze event information includes: When the human eye gaze event information corresponding to the banner notification is a gaze success event, the swing interaction framework triggers a target operation corresponding to the banner notification; and when the human eye gaze event information corresponding to the banner notification is a gaze fail event or a gaze finish event, and human eye gaze event information corresponding to the short video application is a gaze success event, the swing interaction framework triggers a target operation corresponding to the short video application. In this way, when the banner notification is received in a video page flipping scenario corresponding to the short video application, the target operation corresponding to the banner notification may be performed first, and then a video page flipping operation corresponding to the short video application is performed.

In a possible implementation, the priority of the human eye sensing fence corresponding to the banner notification is higher than priority of a human eye sensing fence corresponding to the eBook application. That the swing interaction framework triggers the corresponding target operation based on priorities of the at least two human eye sensing fences and corresponding human eye gaze event information includes: When the human eye gaze event information corresponding to the banner notification is a gaze success event, the swing interaction framework triggers a target operation corresponding to the banner notification; and when the human eye gaze event information corresponding to the banner notification is a gaze fail event or a gaze finish event, and human eye gaze event information corresponding to the eBook application is a gaze success event, the swing interaction framework triggers a target operation corresponding to the eBook application. In this way, when the banner notification is received in a reading page flipping scenario corresponding to the eBook application, the target operation corresponding to the banner notification may be performed first, and then a reading page flipping operation corresponding to the eBook application is performed.

According to a second aspect, an embodiment of this application provides an electronic device, including a memory and a processor, where the memory is configured to store a computer program, and the processor is configured to invoke the computer program, to perform the foregoing human eye detection-based control method.

According to a third aspect, an embodiment of this application provides a computer-readable storage medium. The computer-readable storage medium stores a computer program or instructions, and when the computer program or the instructions are run, the foregoing human eye detection-based control method is implemented.

According to a fourth aspect, an embodiment of this application provides a computer program product, including a computer program. When the computer program is run, a computer is enabled to perform the foregoing human eye detection-based control method.

Effects of various possible implementations of the second aspect to the fourth aspect are similar to effects of the first aspect and the possible designs of the first aspect, and details are not described herein again.

### BRIEF DESCRIPTION OF DRAWINGS

FIG. 1 is a schematic diagram of a hardware system structure of an electronic device according to an embodiment of this application;
FIG. 2 is a schematic diagram of a software system structure of an electronic device according to an embodiment of this application;
FIG. 3 is an interaction diagram of a software system of a human eye detection-based control method according to an embodiment of this application;
FIG. 4A and FIG. 4B are a schematic diagram of interfaces before and after a banner notification corresponding to a Messages application is expanded according to an embodiment of this application;
FIG. 5A and FIG. 5B are a schematic diagram of module interaction of a human eye detection-based control method in a banner notification scenario of a Messages application according to an embodiment of this application;
FIG. 6A and FIG. 6B are a schematic diagram of interfaces before and after a banner notification corresponding to a third-party communication application is displayed according to an embodiment of this application;
FIG. 7A and FIG. 7B are a schematic diagram of module interaction of a human eye detection-based control method in a banner notification scenario of a third-party communication application according to an embodiment of this application;
FIG. 8 is a schematic diagram of interfaces before and after video switching corresponding to a short video application according to an embodiment of this application;
FIG. 9A and FIG. 9B are a schematic diagram of module interaction of a human eye detection-based control method in a video switching scenario of a short video application according to an embodiment of this application;
FIG. 10 is a schematic diagram of interfaces before and after reading page flipping corresponding to an eBook application according to an embodiment of this application;
FIG. 11A and FIG. 11B are a schematic diagram of module interaction of a human eye detection-based control method in a reading page flipping scenario of an eBook application according to an embodiment of this application;
FIG. 12A, FIG. 12B, and FIG. 12C are a schematic diagram of interfaces of a Camera application in a focus tracking process according to an embodiment of this application;
FIG. 13A and FIG. 13B are a schematic diagram of module interaction of a focus tracking method in a camera focus tracking scenario according to an embodiment of this application;
FIG. 14A, FIG. 14B, FIG. 14C, and FIG. 14D are a schematic diagram of interfaces before and after a received banner notification of a Messages application is expanded in a video switching scenario of a short video application according to an embodiment of this application;
FIG. 15 is a schematic diagram of module interaction for processing of a received banner notification of a Messages application in a video switching scenario of a short video application according to an embodiment of this application;
FIG. 16A, FIG. 16B, FIG. 16C, and FIG. 16D are a schematic diagram of interfaces before and after a received banner notification of a Messages application is expanded in a camera focus tracking scenario according to an embodiment of this application;
FIG. 17 is a schematic diagram of module interaction for processing of a received banner notification of a Messages application in a camera focus tracking scenario according to an embodiment of this application;
FIG. 18 is a schematic diagram of a structure of a human eye detection-based control apparatus according to an embodiment of this application; and
FIG. 19 is a schematic diagram of a structure of a chip according to an embodiment of this application.

### DESCRIPTION OF EMBODIMENTS

To clearly describe the technical solutions in the embodiments of this application, in the embodiments of this application, words such as "first" and "second" are used to distinguish between same items or similar items with basically the same functions and effects. For example, a first chip and a second chip are merely intended to distinguish between different chips, and are not intended to limit a sequence of the first chip and the second chip. A person skilled in the art may understand that the words such as "first" and "second" do not limit a quantity and an execution sequence, and the words such as "first" and "second" do not indicate a definite difference.

It should be noted that the words such as "example" or "for example" in the embodiments of this application are used to indicate an example, an illustration, or a description. Any embodiment or design solution described as an "example" or "for example" in this application should not be explained as being more preferred or having more advantages than other embodiments or design solutions. Exactly, use of the word such as "example" or "for example" is intended to present a related concept in a specific manner.

In the embodiments of this application, "at least one" means one or more, and "a plurality of" means two or more. "And/Or" describes an association relationship between associated objects, and represents that three relationships may exist. For example, "A and/or B" may represent the following cases: Only A exists, both A and B exist, and only B exists, where A and B may be singular or plural. The character "/" usually represents an "or" relationship between associated objects. "At least one of the following items" or a similar expression means any combination of these items, including a single item or any combination of a plurality of items. For example, at least one of a, b, or c may represent a, b, c, a-b, a-c, b-c, or a-b-c, where a, b, and c may be singular or plural.

With continuous development of electronic technologies, electronic devices such as a mobile phone and a tablet computer have become common tools in people's life and work. To meet various use requirements of users, a plurality of applications may be installed on the electronic devices.

In some electronic devices, some installed applications may be system applications such as Notepad, Clock, a Messages application, and a Camera application, and the other installed applications may be third-party applications, which may include a third-party communication application (for example, WeChat, QQ, or DingTalk), a short video application (for example, TikTok or Kwai), an eBook application, and the like.

The system applications refer to applications that are pre-installed in the electronic device before the electronic device is delivered from the factory, and belong to applications that are built in the electronic device. A manufacturer of the electronic device may preset a quantity of system applications in the electronic device, to implement some essential functions of the electronic device. Different from the system applications, the third-party applications may be manufactured by third parties and are applications that need to be installed in the electronic device by a user.

During use of the electronic device, the following several scenarios may exist.

Scenario 1: The electronic device may receive a banner notification corresponding to the Messages application. When an information amount of message content included in the banner notification corresponding to the Messages application is large, the electronic device may display a part of the message content in the banner notification on a screen. When the user wants to continue to check all the message content of the banner notification, the user may manually tap the banner notification corresponding to the Messages application. Then, the electronic device may expand the banner notification corresponding to the Messages application in response to the tap operation performed by the user on the banner notification corresponding to the Messages application, to display all the message content of the banner notification corresponding to the Messages application.

Scenario 2: The electronic device may receive a banner notification corresponding to the third-party communication application. When the user checks or replies message content corresponding to the banner notification, the user may manually tap the banner notification corresponding to the third-party communication application. Then, the electronic device may display detailed information of the banner notification corresponding to the third-party communication application in response to the tap operation performed by the user on the banner notification corresponding to the third-party communication application, so that the user can see the detailed information of the banner notification corresponding to the third-party communication application or further reply the banner notification corresponding to the third-party communication application.

Scenario 3: The user may enable the short video application in the electronic device to watch a video. When the user wants to switch a currently played video to a next video, the user may perform upward flicking on the screen of the electronic device. Then, the electronic device may perform switching between videos corresponding to the short video application in response to the upward flicking operation entered by the user, to switch the currently played video to the next video.

Scenario 4: The user may enable the eBook application in the electronic device to read an eBook. When the user wants to flip a currently displayed reading page, for example, flip the currently displayed reading page to a next reading page, the user may perform leftward flicking on the screen of the electronic device. Then, the electronic device may flip a reading page corresponding to the eBook application in response to the leftward flicking operation entered by the user, to flip the currently displayed reading page to the next reading page.

Scenario 5: The user may enable the Camera application in the electronic device for shooting. The user may perform a tap operation on a specific focus region in a viewfinder frame. Then, the electronic device may perform focus processing on an object in the focus region in response to the tap operation performed by the user on the focus region in the viewfinder frame. In addition, the user may further perform a tap operation on another focus region in the viewfinder frame again. Then, the electronic device may switch a focal point of a camera in response to the tap operation performed by the user on the another focus region in the viewfinder frame, to perform focus processing again.

Therefore, it can be learned that, during use of the electronic device, the user often needs to manually perform the tap operation, the flicking operation, or the like on the electronic device, to implement the following functions: expanding the banner notification corresponding to the Messages application, displaying the detailed information of the banner notification corresponding to the third-party communication application, performing video switching for the short video application, and flipping the reading page corresponding to the eBook application, resulting in tedious user operations.

Based on this, an embodiment of this application provides a human eye detection-based control method. When triggering detection for a human eye gaze location, a swing interaction framework registers a human eye sensing fence with a smart sensing service; the smart sensing service sends a registration request to a camera service, where the registration request is used to start the detection for the human eye gaze location; the camera service sends the obtained human eye gaze location to the smart sensing service in response to the registration request; the smart sensing service determines human eye gaze event information based on the human eye gaze location and the human eye sensing fence; the smart sensing service sends the human eye gaze event information to the swing interaction framework; and the swing interaction framework triggers a corresponding target operation when the human eye gaze event information is a gaze success event. The target operation includes any one of the following: expanding a banner notification corresponding to a Messages application, displaying detailed information of a banner notification corresponding to a third-party communication application, switching between videos corresponding to a short video application, and flipping a reading page corresponding to an eBook application.

In this way, the human eye gaze event information is determined based on the human eye gaze location and the human eye sensing fence, and when the human eye gaze event information is the gaze success event, operations such as expanding the banner notification corresponding to the Messages application, displaying the detailed information of the banner notification corresponding to the third-party communication application, performing video switching for the short video application, and flipping the reading page corresponding to the eBook application are automatically performed, thereby reducing cumbersomeness of a user operation, and improving user experience.

The human eye detection-based control method provided in this embodiment of this application may be applied to an electronic device. The electronic device includes a terminal device. The terminal device may also be referred to as a terminal (terminal), user equipment (user equipment, UE), a mobile station (mobile station, MS), a mobile terminal (mobile terminal, MT), or the like. The electronic device may be a mobile phone (mobile phone), a smart TV, a wearable device, a tablet computer (Pad), a computer having a wireless transceiver function, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used by the electronic device are not limited in the embodiments of this application.

To better understand the embodiments of this application, the following describes a structure of the electronic device in the embodiments of this application.

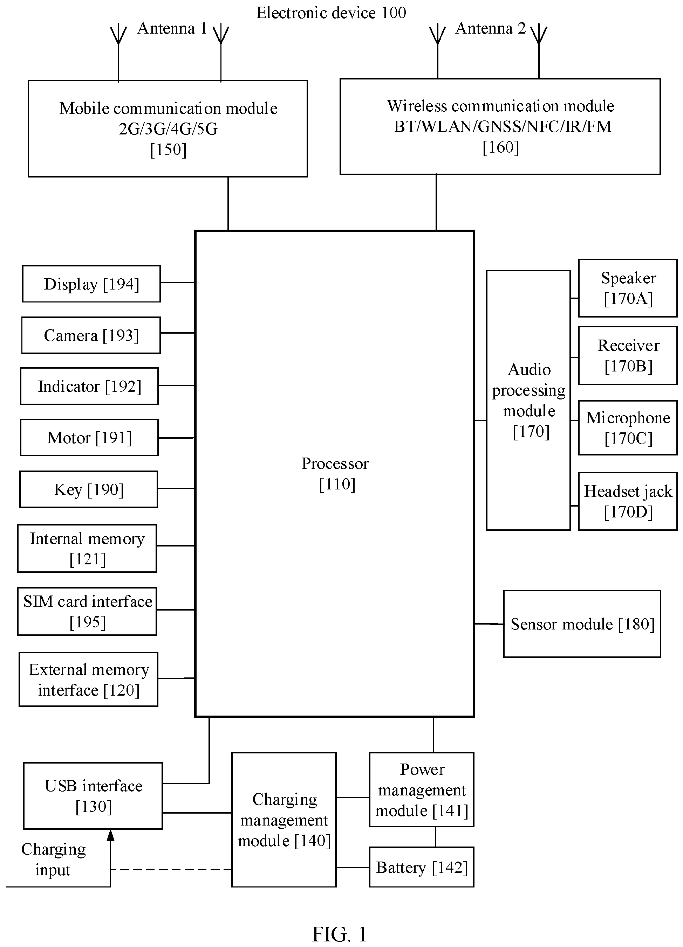

FIG. 1 is a schematic diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identification module (subscriber identification module, SIM) card interface 195, and the like.

It may be understood that the structure illustrated in this embodiment of this application constitutes no specific limitation on the electronic device 100. In some other embodiments of this application, the electronic device 100 may include more or fewer components than those shown in the figure, combine some components, split some components, or have different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may invoke the instructions or the data from the memory. This avoids repeated access and reduces a waiting time of the processor 110, thereby improving system efficiency.

The charging management module 140 is configured to receive a charging input from a charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input by using a wireless charging coil of the electronic device 100. When charging the battery 142, the charging management module 140 may further supply power to the electronic device by using the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. The antennas of the electronic device 100 may be configured to cover one or more communication bands. Different antennas may be further multiplexed to increase antenna utilization. For example, the antenna 1 may be multiplexed as a diversity antenna in a wireless local area network. In some other embodiments, the antenna may be used in combination with a tuning switch.

The mobile communication module 150 may provide a solution applied to the electronic device 100 for wireless communication including 2G/3G/4G/5G and the like. The mobile communication module 150 may include at least one filter, a switch, a power amplifier, a low noise amplifier (low noise amplifier, LNA), and the like.

The wireless communication module 160 may provide a solution applied to the electronic device 100 for wireless communication including a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), infrared (infrared, IR), and the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the to-be-sent signal, and convert, by using the antenna 2, the to-be-sent signal into an electromagnetic wave for radiation.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology.

The electronic device 100 implements a display function by using the GPU, the display 194, the application processor, and the like. The GPU is a microprocessor for image processing and is connected to the display 194 and the application processor. The GPU is configured to perform mathematical and geometric calculation for graphics rendering. The processor 110 may include one or more GPUs, and the one or more GPUs execute program instructions to generate or change displayed information.

The display 194 is configured to display an image, display a video, receive a flicking operation, and the like. The display 194 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diode, QLED), or the like. In some embodiments, the electronic device 100 may include one or N displays 194.

The electronic device 100 may implement a shooting function by using the ISP, the camera 193, the video codec, the GPU, the display 194, the application processor, and the like.

The ISP is configured to process data fed back by the camera 193. For example, during shooting, a shutter is pressed, and light is transmitted to a photosensitive element of the camera through a lens. An optical signal is converted into an electrical signal. The photosensitive element of the camera transmits the electrical signal to the ISP for processing, to convert the electrical signal into an image visible to naked eyes. The ISP may further perform algorithm optimization on noise, brightness, and complexion of the image. The ISP may further optimize parameters such as exposure and a color temperature of a shooting scenario. In some embodiments, the ISP may be disposed in the camera 193.

The camera 193 is configured to capture a still image or a video. An optical image of an object is generated through the lens and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or more cameras 193.

The external memory interface 120 may be configured to connect to an external memory card, for example, a Micro SD card, to expand a storage capability of the electronic device 100. The external memory card communicates with the processor 110 through the external memory interface 120, to implement a data storage function, for example, to store files such as music and a video in the external memory card.

The internal memory 121 may be configured to store computer-executable program code, and the executable program code includes instructions. The internal memory 121 may include a program storage region and a data storage region. The program storage region may store an operating system, an application required by at least one function (for example, a sound play function or an image play function), and the like. The data storage region may store data (for example, audio data and a phone book) and the like created during use of the electronic device 100. In addition, the internal memory 121 may include a high-speed random access memory, and may further include a non-volatile memory, for example, at least one magnetic disk storage device, a flash memory device, or a universal flash storage (universal flash storage, UFS). The processor 110 performs various function applications and data processing of the electronic device 100 by running the instructions stored in the internal memory 121 and/or instructions stored in the memory disposed in the processor.

The electronic device 100 may implement an audio function by using the audio module 170, the speaker 170A, the receiver 170B, the microphone 170C, the headset jack 170D, the application processor, and the like. For example, music play and sound recording are implemented.

The key 190 includes a power-on/off key, a volume key, and the like. The key 190 may be a mechanical key, or may be a touch key. The electronic device 100 may receive a key input and generate a key signal input related to user settings and function control of the electronic device 100.

The motor 191 may generate a vibration prompt. The motor 191 may be configured to provide a vibration prompt for an incoming call, and may be further configured to provide vibration feedback for a touch. The indicator 192 may be an indicator light, may be configured to indicate a charging status or a power change, and may be further configured to indicate a message, a missed incoming call, a notification, and the like. The SIM card interface 195 is configured to connect to a SIM card. The SIM card may be inserted into the SIM card interface 195 or removed from the SIM card interface 195 to implement contact with and separation from the electronic device 100.

A software system of the electronic device 100 may use a layered architecture, an event-driven architecture, a microkernel architecture, a microservice architecture, a cloud architecture, or the like. In the embodiments of this application, an Android system with a layered architecture is used as an example to describe a software structure of the electronic device 100.

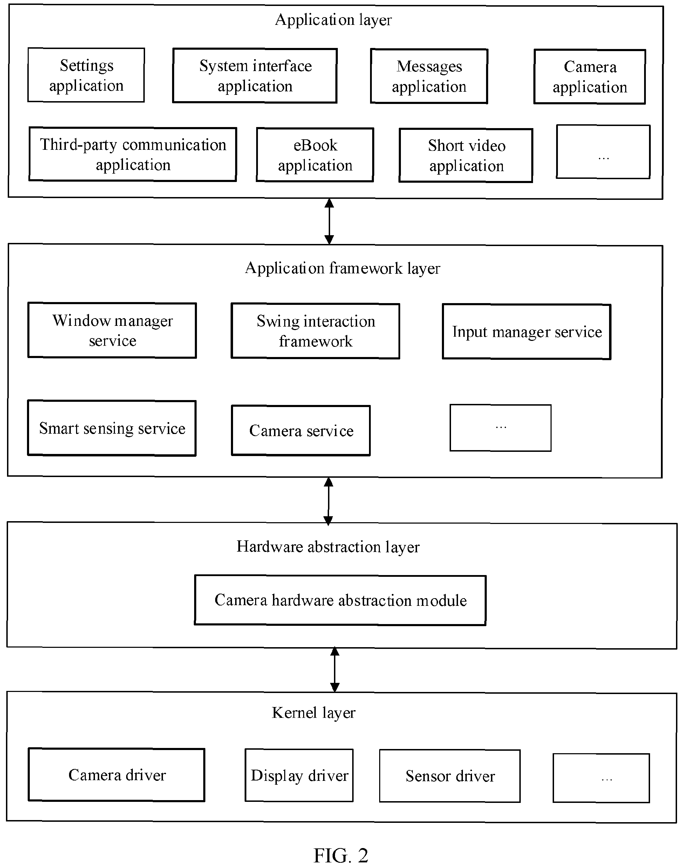

FIG. 2 is a block diagram of a software structure of an electronic device according to an embodiment of this application. In the layered architecture, software is divided into several layers, and each layer has a clear role and task. The layers communicate with each other through software interfaces. In some embodiments, the Android system is divided into four layers from top to bottom: an application layer, an application framework layer, a hardware abstraction layer (hardware abstraction layer, HAL), and a kernel layer.

The application layer may include a series of application packages. As shown in FIG. 2, the application package may include applications such as a Settings application, a system interface application (that is, a system UI application), a Messages application, a Camera application, a third-party communication application, an eBook application, and a short video application.

The system interface application is a system application of the electronic device. The system interface application is system-level information provided by a system of the electronic device for a user, and is displayed as a set of user interface (user interface, UI) components that interact with the user, including but not limited to system pages such as a status bar, a notification bar, a pull-down menu, a navigation bar, a lock screen, a recent task, and a low battery prompt. Specifically, the system interface application of the electronic device is enabled when the electronic device is powered on, to display a system interface.

The application framework layer provides an application programming interface (application programming interface, API) and a programming framework for the applications at the application layer. The application framework layer includes some predefined functions.

As shown in FIG. 2, the application framework layer may include a window manager service (window manager service, WMS), a swing interaction framework, an input manager service, a smart sensing service, a camera service (that is, a camera service), and the like.

The window manager service is used to manage a window program. The window manager service may obtain a size of a display, determine whether there is a status bar, whether to lock a screen, take a screenshot, and the like. In the embodiments of this application, the window manager service may identify a status of an application, and the status includes an enabled state, a foreground running state, and a background running state. When the window manager service detects that a short video application is enabled and runs in a foreground, the window manager service sends application information corresponding to the short video application to the swing interaction framework. When the window manager service detects that an eBook application is enabled and runs in a foreground, the window manager service sends application information corresponding to the eBook application to the swing interaction framework.

The swing interaction framework may also be referred to as a system interaction framework, which refers to an entire class system of swing, where relationships between classes form a framework. The swing interaction framework may register a human eye sensing fence with the smart sensing service, and receive human eye gaze event information or a human eye gaze location sent by the smart sensing service. The human eye gaze event information includes a gaze success event, a gaze fail event, and a gaze finish event.

In a banner notification scenario corresponding to a third-party communication application, a video page flipping scenario of the short video application, and a reading page flipping scenario corresponding to the eBook application, the swing interaction framework may further inject touch events into the input manager service.

The input manager service is used to allocate the touch events input by the swing interaction framework to corresponding third-party applications such as the third-party communication application, the short video application, and the eBook application.

In a banner notification scenario corresponding to a Messages application, the banner notification scenario corresponding to the third-party communication application, the video page flipping scenario of the short video application, and the reading page flipping scenario corresponding to the eBook application, the smart sensing service is used to determine the human eye gaze event information based on the human eye gaze location sent by the camera service and the human eye sensing fence registered by the swing interaction framework, and send the human eye gaze event information to the swing interaction framework.

In a camera focus tracking scenario, the smart sensing service is used to determine, based on the human eye gaze location sent by the camera service and the human eye sensing fence registered by the swing interaction framework, whether the human eye gaze location meets a focus tracking condition; and when the human eye gaze location meets the focus tracking condition, the smart sensing service sends the human eye gaze location to the swing interaction framework.

The camera service is used to receive the human eye gaze location sent by the camera hardware abstraction module, and send the human eye gaze location to the smart sensing service.

The hardware abstraction layer is obtained by encapsulating hardware drivers of the kernel layer, to provide invoke interfaces for the application framework layer. In the embodiments of this application, the hardware abstraction layer may include a camera hardware abstraction module (that is, camera HAL), and the camera hardware abstraction module may send, to the camera service, the human eye gaze location reported by a camera driver.

The kernel layer is a layer between hardware and software. The kernel layer includes at least a camera driver, a display driver, a sensor driver, and the like. In the embodiments of this application, a human eye detection algorithm may be integrated in the camera driver, and the camera driver may obtain an image collected by a camera. When the image collected by the camera includes a human eye, the camera driver may detect, based on the human eye detection algorithm, the image that includes the human eye, to determine the human eye gaze location.

The hardware may be a camera, a display, a sensor, and the like.

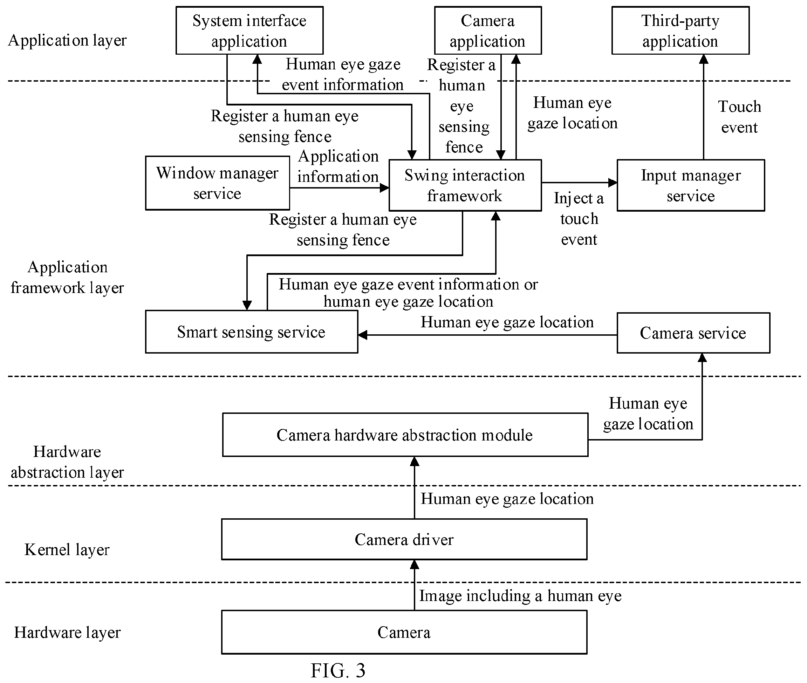

For ease of understanding, an interaction process between modules related to the human eye detection-based control method provided in the embodiments of this application is described below with reference to FIG. 3.

As shown in FIG. 3, an electronic device may include an application layer, an application framework layer, a hardware abstraction layer, a kernel layer, and a hardware layer. The application layer includes a system interface application, a Camera application, and a third-party application. The third-party application may be a third-party communication application, an eBook application, a short video application, or the like. The application framework layer may include a window manager service, a swing interaction framework, an input manager service, a smart sensing service, and a camera service. The hardware abstraction layer may include a camera hardware abstraction module. The kernel layer may include a camera driver. The hardware layer may include a camera.

The camera may send a collected image including a human eye to the camera driver. A human eye detection algorithm may be integrated in the camera driver. The camera driver may detect, based on the human eye detection algorithm, the image including the human eye, to determine a human eye gaze location, and send the human eye gaze location to the camera hardware abstraction module. Then, the camera hardware abstraction module sends the human eye gaze location to the camera service.

In a banner notification scenario corresponding to a Messages application, when the system interface application receives a banner notification corresponding to the Messages application and the banner notification is an expandable banner notification, the system interface application may determine whether the electronic device supports a human eye detection function; when the electronic device supports the human eye detection function, the system interface application may determine whether a human eye detection switch corresponding to the Messages application is enabled; and when the human eye detection switch corresponding to the Messages application is enabled, the system interface application may register a human eye sensing fence corresponding to the Messages application with the swing interaction framework.

After the swing interaction framework receives the human eye sensing fence that corresponds to the Messages application and that is registered by the system interface application, the swing interaction framework may register the human eye sensing fence corresponding to the Messages application with the smart sensing service. The smart sensing service may obtain the human eye gaze location from the camera service, and determine human eye gaze event information based on the human eye gaze location and the human eye sensing fence corresponding to the Messages application, and the smart sensing service may further send the human eye gaze event information to the swing interaction framework. The human eye gaze event information includes a gaze success event, a gaze fail event, and a gaze finish event. The swing interaction framework may further send the human eye gaze event information to the system interface application. When the human eye gaze event information is a gaze success event, the system interface application may expand the banner notification corresponding to the Messages application.

In a banner notification scenario corresponding to the third-party communication application, when the system interface application receives a banner notification corresponding to the third-party communication application, the system interface application may determine whether the electronic device supports a human eye detection function; when the electronic device supports the human eye detection function, the system interface application may determine whether a human eye detection switch corresponding to the third-party communication application is enabled; and when the human eye detection switch corresponding to the third-party communication application is enabled, the system interface application may register a human eye sensing fence corresponding to the third-party communication application with the swing interaction framework.

After the swing interaction framework receives the human eye sensing fence that corresponds to the third-party communication application and that is registered by the system interface application, the swing interaction framework may register the human eye sensing fence corresponding to the third-party communication application with the smart sensing service. The smart sensing service may obtain the human eye gaze location from the camera service, and determine human eye gaze event information based on the human eye gaze location and the human eye sensing fence corresponding to the third-party communication application, and the smart sensing service may further send the human eye gaze event information to the swing interaction framework. The human eye gaze event information includes a gaze success event, a gaze fail event, and a gaze finish event. When the human eye gaze event information is a gaze success event, the swing interaction framework may perform mapping to obtain a first touch event, and inject the first touch event into the input manager service. The input manager service may send the first touch event to the third-party communication application, and the third-party communication application displays detailed information of the banner notification corresponding to the third-party communication application in response to the first touch event.

In a video page flipping scenario corresponding to the short video application, when the window manager service senses that the short video application runs in a foreground, the window manager service sends application information corresponding to the short video application to the swing interaction framework. The swing interaction framework may determine whether the electronic device supports a human eye detection function; when the electronic device supports the human eye detection function, the swing interaction framework may determine whether a human eye detection switch corresponding to the short video application is enabled; and when the human eye detection switch corresponding to the short video application is enabled, the swing interaction framework may register a human eye sensing fence corresponding to the short video application with the smart sensing service.

The smart sensing service may obtain the human eye gaze location from the camera service, and determine human eye gaze event information based on the human eye gaze location and the human eye sensing fence corresponding to the short video application, and the smart sensing service may further send the human eye gaze event information to the swing interaction framework. The human eye gaze event information includes a gaze success event, a gaze fail event, and a gaze finish event. When the human eye gaze event information is a gaze success event, the swing interaction framework may perform mapping to obtain a second touch event, and inject the second touch event into the input manager service. The input manager service may send the second touch event to the short video application, and the short video application performs video page flipping in response to the second touch event, to switch a currently played first video to a second video.

In a reading page flipping scenario corresponding to the eBook application, when the window manager service senses that the eBook application runs in a foreground, the window manager service sends application information corresponding to the eBook application to the swing interaction framework. The swing interaction framework may determine whether the electronic device supports a human eye detection function; when the electronic device supports the human eye detection function, the swing interaction framework may determine whether a human eye detection switch corresponding to the eBook application is enabled; and when the human eye detection switch corresponding to the eBook application is enabled, the swing interaction framework may register a human eye sensing fence corresponding to the eBook application with the smart sensing service.

The smart sensing service may obtain the human eye gaze location from the camera service, and determine human eye gaze event information based on the human eye gaze location and the human eye sensing fence corresponding to the eBook application, and the smart sensing service may further send the human eye gaze event information to the swing interaction framework. The human eye gaze event information includes a gaze success event, a gaze fail event, and a gaze finish event. When the human eye gaze event information is a gaze success event, the swing interaction framework may perform mapping to obtain a third touch event, and inject the third touch event into the input manager service. The input manager service may send the third touch event to the eBook application, and the eBook application performs reading page flipping in response to the third touch event, to switch a currently displayed first reading page to a second reading page.

In a camera focus tracking scenario, when the Camera application is enabled and a shooting mode is a focus trackable mode, the Camera application may determine whether the electronic device supports a human eye detection function; when the electronic device supports the human eye detection function, the Camera application determines whether a human eye detection switch corresponding to the Camera application is enabled; and when the human eye detection switch corresponding to the Camera application is enabled, the Camera application may register a human eye sensing fence corresponding to the Camera application with the swing interaction framework.

After the swing interaction framework receives the human eye sensing fence that corresponds to the Camera application and that is registered by the Camera application, the swing interaction framework may register the human eye sensing fence corresponding to the Camera application with the smart sensing service. The smart sensing service may obtain the human eye gaze location from the camera service, and determine, based on the human eye gaze location and the human eye sensing fence corresponding to the Camera application, whether the human eye gaze location meets a focus tracking condition; and the smart sensing service sends the human eye gaze location to the swing interaction framework when the human eye gaze location meets the focus tracking condition. Then, the swing interaction framework sends the human eye gaze location to the Camera application, and the Camera application performs focus tracking processing based on the human eye gaze location.

It should be noted that although an Android system is used as an example for description in the embodiments of this application, a principle of the human eye detection-based control method is also applicable to an electronic device having an operating system such as iOS or Windows.

The following describes, in detail by using specific embodiments, the technical solutions of this application and how the foregoing technical problems are resolved by using the technical solutions of this application. The following several specific embodiments may be implemented independently, or may be combined with each other. For same or similar concepts or processes, details may not be described in some embodiments again.

Application scenarios of the embodiments of this application mainly include the following five scenarios: a banner notification scenario corresponding to a Messages application, a banner notification scenario corresponding to a third-party communication application, a video page flipping scenario corresponding to a short video application, a reading page flipping scenario corresponding to an eBook application, and a camera focus tracking scenario.

A banner notification refers to a notification displayed at the top of a screen when an electronic device is in a running state, for example, when the electronic device displays a home screen or another application interface after being unlocked.

The following describes, by using an example in which the electronic device is a mobile phone, scenarios related to the human eye detection-based control method in the embodiments of this application. It should be understood that the scenarios described in the following embodiments are merely some of the examples in the embodiments of this application, and do not constitute a limitation on this application. Another scenario suitable for the human eye detection-based control method also falls within the protection scope of the embodiments of this application.

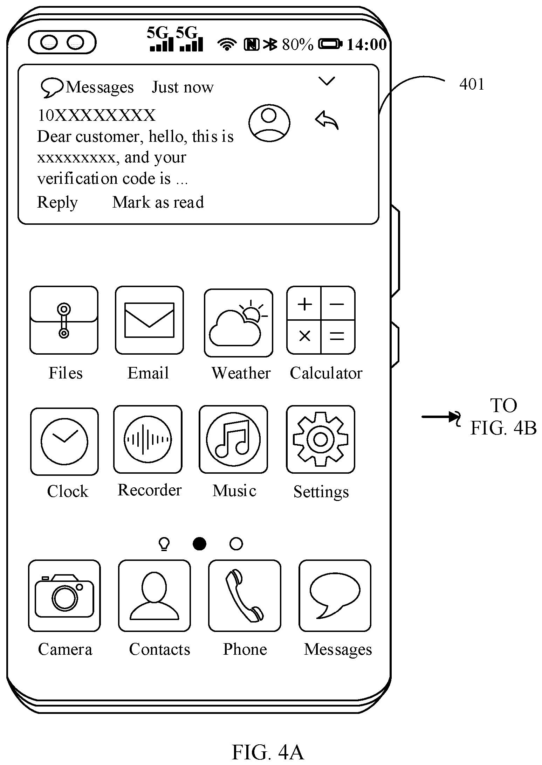

The banner notification scenario corresponding to the Messages application is used as an example. For example, as shown in FIG. 4A, icons of a plurality of installed applications, for example, icons of applications such as Files, Email, Weather, Calculator, Clock, Recorder, Music, and Settings, are displayed on the home screen of the electronic device. In a process in which the electronic device displays the home screen, when the electronic device receives a banner notification corresponding to the Messages application, a banner notification 401 that corresponds to the Messages application and that is shown in FIG. 4A may pop up on a screen.

The banner notification 401 corresponding to the Messages application may be displayed at a top location of the screen. The banner notification 401 corresponding to the Messages application may include a name (for example, the Messages application) and an icon of a message source application, a time at which the banner notification is generated, information about a banner notification sender (for example, information such as a name 10XXXXXXXX of a sender and a head portrait of the sender), and a part of message content of the banner notification (for example, "Dear customer, hello, this is xxxxxxxxx, and your verification code is ..."). In addition, the banner notification 401 corresponding to the Messages application further includes a Reply control, a Mark as read control, and the like.

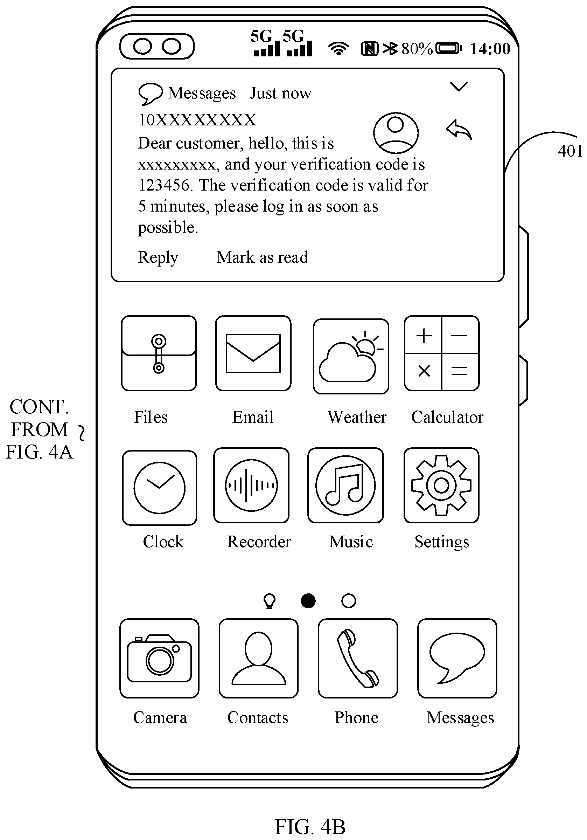

When a user wants to continue to check all the message content included in the banner notification 401 corresponding to the Messages application, the user may gaze at a region in which the banner notification 401 corresponding to the Messages application is located, so that the electronic device can display an interface shown in FIG. 4B, that is, automatically expand the banner notification 401 corresponding to the Messages application, to display all the message content of the banner notification 401 corresponding to the Messages application (for example, "Dear customer, hello, this is xxxxxxxxx, and your verification code is: 123456. The verification code is valid for 5 minutes, please log in as soon as possible.").

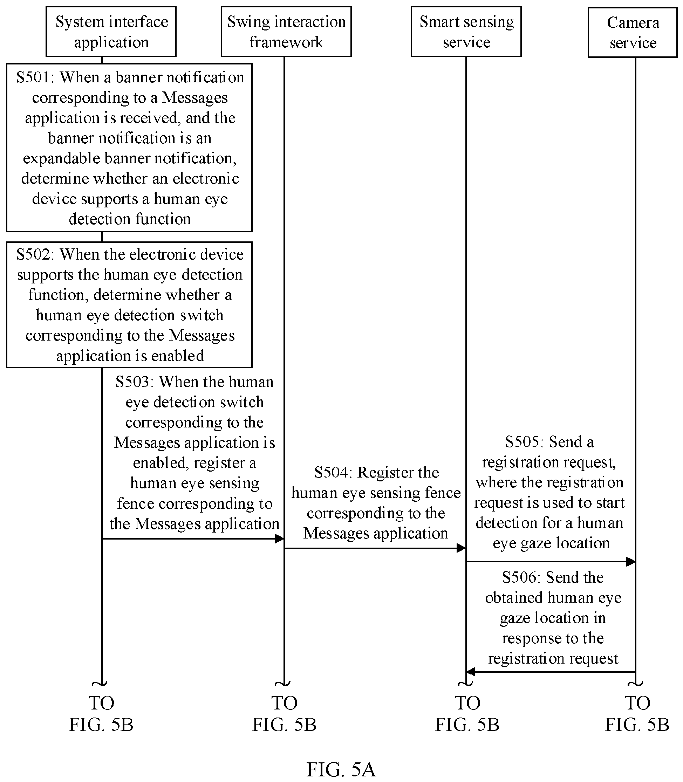

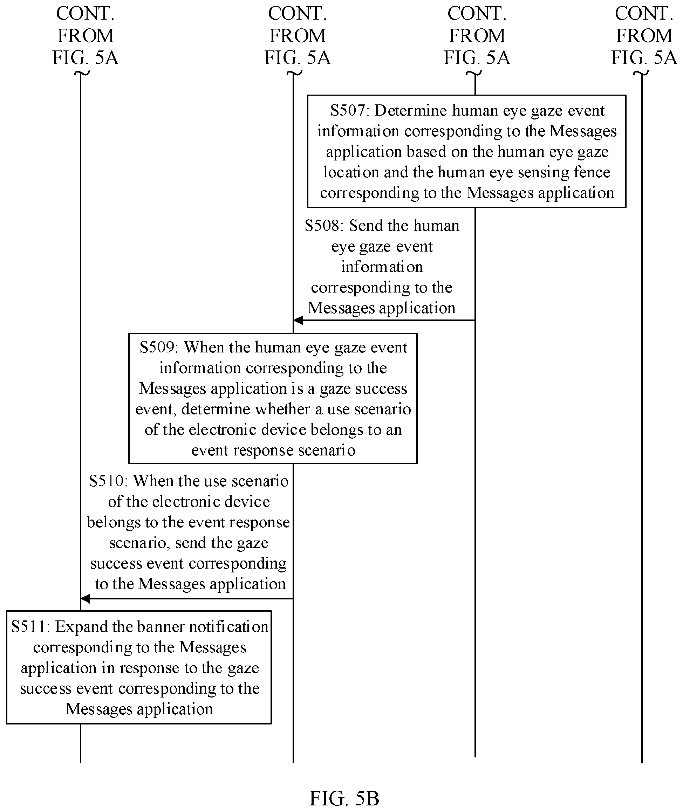

For example, FIG. 5A and FIG. 5B are a schematic diagram of module interaction of a human eye detection-based control method in a banner notification scenario of a Messages application according to an embodiment of this application. Refer to FIG. 5A and FIG. 5B. An electronic device may include a system interface application, a swing interaction framework, a smart sensing service, and a camera service. The human eye detection-based control method may specifically include the following steps.

S501: When the system interface application receives a banner notification corresponding to a Messages application, and the banner notification is an expandable banner notification, the system interface application determines whether the electronic device supports a human eye detection function.

In some embodiments, when an information amount of message content included in the banner notification corresponding to the Messages application is small, the electronic device may display all the message content included in the banner notification corresponding to the Messages application. However, when an information amount of message content included in the banner notification corresponding to the Messages application is large, the electronic device may display a part of the message content included in the banner notification corresponding to the Messages application, and the other part of the message content is not displayed.

Therefore, when receiving the banner notification corresponding to the Messages application, the system interface application may determine, based on the information amount of the message content included in the banner notification corresponding to the Messages application, whether the banner notification corresponding to the Messages application is an expandable banner notification.

When the information amount of the message content included in the banner notification corresponding to the Messages application is small, the banner notification corresponding to the Messages application is a banner notification that is not expandable. In this case, the electronic device does not need to perform a subsequent step in this embodiment of this application, and the banner notification corresponding to the Messages application is automatically collapsed after the banner notification is displayed on a screen of the electronic device for a period of time.

When the information amount of the message content included in the banner notification corresponding to the Messages application is large, the banner notification corresponding to the Messages application is an expandable banner notification. In this case, the system interface application needs to determine whether the electronic device supports the human eye detection function. Specifically, the system interface application may determine, by reading a configuration item in the electronic device, whether the electronic device supports the human eye detection function.

S502: When the electronic device supports the human eye detection function, the system interface application determines whether a human eye detection switch corresponding to the Messages application is enabled.

In some embodiments, when the system interface application determines that the electronic device supports the human eye detection function, the system interface application may further determine whether the human eye detection switch corresponding to the Messages application is enabled. Specifically, the system interface application may determine, by invoking a setting interface, whether the human eye detection switch corresponding to the Messages application is enabled.

When the system interface application determines that the electronic device does not support the human eye detection function, the electronic device does not need to perform the step of determining whether the human eye detection switch corresponding to the Messages application is enabled and a subsequent step in this embodiment of this application.

S503: When the human eye detection switch corresponding to the Messages application is enabled, the system interface application registers a human eye sensing fence corresponding to the Messages application with the swing interaction framework.

In some embodiments, the swing interaction framework exposes a registration-callback interface to the system interface application. When the system interface application determines that the human eye detection switch corresponding to the Messages application is enabled, the system interface application may register, by invoking the registration-callback interface, the human eye sensing fence corresponding to the Messages application with the swing interaction framework, to trigger detection for a human eye gaze location.

When the system interface application determines that the human eye detection switch corresponding to the Messages application is not enabled, the electronic device does not need to perform the step of registering the human eye sensing fence corresponding to the Messages application with the swing interaction framework and a subsequent step in this embodiment of this application.

In this embodiment of this application, the human eye sensing fence may include a report type (report type) and report parameters. The report type of the human eye sensing fence corresponding to the Messages application is one-time report. The system interface application may determine, based on a package name of an application, data corresponding to the report type.

For example, data corresponding to the report type of the Messages application may be report type: 1, which can represent that the report type of the Messages application is one-time report. Alternatively, data corresponding to a report type of a third-party communication application (for example, a WeChat application) may be report type: 2, which represents that the report type of the third-party communication application is one-time report. Alternatively, data corresponding to a report type of a short video application (for example, a TikTok application) may be report type: 3, which represents that the report type of the short video application is one-time report. Alternatively, data corresponding to a report type of an eBook application may be report type: 4, which represents that the report type of the eBook application is one-time report.

The report parameters in the human eye sensing fence corresponding to the Messages application are one-time report parameters, which may include a first preset region, first preset duration, second preset duration, a report result, and a gaze finish event.

The first preset region may be represented by reportRegion(frameLeft, frameTop)(frameRight, frameBottom)(xxx, xxx)(xxx, xxx), which includes horizontal and vertical coordinates at a top-left corner and horizontal and vertical coordinates at a bottom-right corner of the specified first preset region. For example, the first preset region corresponding to the Messages application may be at a top location of the screen, that is, a display location of the banner notification corresponding to the Messages application.

The first preset duration may be represented by gazeTime xx seconds. The first preset duration may also be referred to as a gaze time, which represents that an event continues to occur in the first preset region within a specified time. For example, the first preset duration corresponding to the Messages application may be 3 seconds.

The second preset duration may be represented by timeout xxx seconds. The second preset duration may also be referred to as a specified timeout time. For example, the second preset duration corresponding to the Messages application may be 5 seconds.

The report result includes a report success result (detectResult success) and a report fail result (detectResult fail). Within the second preset duration, when the human eye gaze location is located in the first preset region, and duration in which the human eye gaze location remains in the first preset region reaches the first preset duration, the report result is a report success result. Within the second preset duration, when the human eye gaze location is located outside the first preset region, the report result is a report fail result; or within the second preset duration, when the human eye gaze location is located in the first preset region but duration in which the human eye gaze location remains in the first preset region does not reach the first preset duration, the report result is a report fail result.

The gaze finish event (gazeFinishEvent) represents an event that the human eye gaze location leaves the first preset region after the report result is a report success result.

S504: The swing interaction framework registers the human eye sensing fence corresponding to the Messages application with the smart sensing service.

In some embodiments, the smart sensing service exposes a human eye event sensing fence interface to the swing interaction framework. After the system interface application registers the human eye sensing fence corresponding to the Messages application with the swing interaction framework, the swing interaction framework may register, by invoking the human eye event sensing fence interface, the human eye sensing fence corresponding to the Messages application with the smart sensing service. The human eye sensing fence that corresponds to the Messages application and that is registered with the swing interaction framework by the system interface application is the same as the human eye sensing fence that corresponds to the Messages application and that is registered with the smart sensing service by the swing interaction framework.

S505: The smart sensing service sends a registration request to the camera service, where the registration request is used to start detection for a human eye gaze location.

S506: The camera service sends the obtained human eye gaze location to the smart sensing service in response to the registration request.

In some embodiments, the smart sensing service may send the registration request to the camera service after the swing interaction framework registers the human eye sensing fence corresponding to the Messages application with the smart sensing service. The registration request is used to monitor the human eye gaze location to start the detection for the human eye gaze location.

After receiving the registration request sent by the smart sensing service, the camera service sends a request instruction for the human eye gaze location to a camera driver by using a camera hardware abstraction module. The camera driver may drive a camera based on the request instruction to collect an image. In addition, a human eye detection algorithm is set in the camera driver, and the camera driver may detect an image including a human eye based on the human eye detection algorithm, to detect a user gaze point location, that is, detect the human eye gaze location. The camera driver sends the detected human eye gaze location to the camera service by using the camera hardware abstraction module, and then the camera service sends the obtained human eye gaze location to the smart sensing service.

S507: The smart sensing service determines human eye gaze event information corresponding to the Messages application based on the human eye gaze location and the human eye sensing fence corresponding to the Messages application.

After the smart sensing service receives the human eye gaze location sent by the camera service and the human eye sensing fence that corresponds to the Messages application and that is registered by the swing interaction framework, the smart sensing service may determine the human eye gaze event information corresponding to the Messages application based on the human eye gaze location and the human eye sensing fence corresponding to the Messages application. The human eye gaze event information corresponding to the Messages application includes a gaze success event, a gaze fail event, and a gaze finish event.

In a possible implementation, the smart sensing service may determine the human eye gaze event information corresponding to the Messages application in the following manner: Within the second preset duration, when the smart sensing service determines that the human eye gaze location is located in the first preset region, and the duration in which the human eye gaze location remains in the first preset region reaches the first preset duration, the smart sensing service determines that the human eye gaze event information is a gaze success event.

The smart sensing service compares the human eye gaze location with the first preset region, to determine whether the human eye gaze location is located in the first preset region; when the human eye gaze location is located in the first preset region for the first time, the smart sensing service starts to count the duration in which the human eye gaze location is located in the first preset region; and when the duration in which the human eye gaze location remains in the first preset region reaches the first preset duration, the smart sensing service determines that the human eye gaze event information is a gaze success event. The gaze success event may also be referred to as the report success result.

For example, the first preset duration corresponding to the Messages application is 3 seconds, the second preset duration corresponding to the Messages application is 5 seconds. Within 5 seconds, when the human eye gaze location is located in the first preset region corresponding to the Messages application and the duration in which the human eye gaze location remains in the first preset region corresponding to the Messages application reaches 3 seconds, the smart sensing service determines that the human eye gaze event information is a gaze success event.

When the smart sensing service determines that the human eye gaze location is located outside the first preset region within the second preset duration, the smart sensing service determines that the human eye gaze event information is a gaze fail event; or when the smart sensing service determines that the human eye gaze location is located in the first preset region within the second preset duration but the duration in which the human eye gaze location remains in the first preset region does not reach the first preset duration, the smart sensing service determines that the human eye gaze event information is a gaze fail event. The gaze fail event may also be referred to as the report fail result.

S508: The smart sensing service sends the human eye gaze event information corresponding to the Messages application to the swing interaction framework.

After the smart sensing service determines the human eye gaze event information corresponding to the Messages application based on the human eye gaze location and the human eye sensing fence corresponding to the Messages application, the smart sensing service sends the human eye gaze event information corresponding to the Messages application to the swing interaction framework. In this case, the human eye gaze event information may be a gaze success event or a gaze fail event.

S509: When the human eye gaze event information corresponding to the Messages application is a gaze success event, the swing interaction framework determines whether a use scenario of the electronic device belongs to an event response scenario.

In some scenarios of the electronic device, even if the human eye gaze event information corresponding to the Messages application is a gaze success event, the banner notification corresponding to the Messages application is not expanded in response to the gaze success event corresponding to the Messages application.

For example, the electronic device may not expand the banner notification corresponding to the Messages application in response to the gaze success event corresponding to the Messages application when the electronic device is in the following scenarios: a floating window scenario, a one-hand mode scenario, a split-screen scenario, an App extender scenario, a touch screen use scenario, an input method use scenario, a collaboration scenario, a lock screen scenario, a screen reading function use scenario, a power saving mode use scenario, and the like.

When the electronic device is in scenarios such as the floating window scenario, the one-hand mode scenario, the split-screen scenario, and the App extender scenario, a window range narrows, and a higher requirement is put forward for detection precision of the human eye gaze location. Therefore, to avoid a case in which the banner notification corresponding to the Messages application is falsely expanded or the banner notification corresponding to the Messages application cannot be automatically expanded due to inaccurate detection of the human eye gaze location, when the electronic device is in any one of the floating window scenario, the one-hand mode scenario, the split-screen scenario, and the App extender scenario, the banner notification corresponding to the Messages application may not be expanded in response to the gaze success event corresponding to the Messages application.

The collaboration scenario may include a scenario such as a personal computer (personal computer, PC) collaboration scenario, a Pad collaboration scenario, a PC mode scenario, a sidecar function scenario, or a connected input scenario.

In some embodiments, when the swing interaction framework determines that the human eye gaze event information corresponding to the Messages application is a gaze success event, the swing interaction framework needs to first determine whether the use scenario of the electronic device belongs to the foregoing scenarios in which the gaze success event corresponding to the Messages application is not responded to.

When the use scenario of the electronic device belongs to one of the foregoing scenarios in which the gaze success event corresponding to the Messages application is not responded to, the swing interaction framework determines that the use scenario of the electronic device does not belong to the event response scenario, and the swing interaction framework does not perform a subsequent step. When the use scenario of the electronic device does not belong to the foregoing scenarios in which the gaze success event corresponding to the Messages application is not responded to, the swing interaction framework determines that the use scenario of the electronic device belongs to the event response scenario.

In a possible implementation, the electronic device further includes a window manager service. The swing interaction framework may send a first scenario query request to the window manager service. In response to the first scenario query request, the window manager service returns, to the swing interaction framework, whether a current use scenario is the floating window scenario, the one-hand mode scenario, the split-screen scenario, the App extender scenario, or the like.

The electronic device further includes an input manager service. The swing interaction framework may send a second scenario query request to the input manager service. In response to the second scenario query request, the input manager service returns, to the swing interaction framework, whether the current use scenario is the touch screen use scenario or the input method use scenario.

The electronic device further includes a collaboration service located at an application framework layer. The swing interaction framework may send a third scenario query request to the collaboration service. In response to the third scenario query request, the collaboration service returns, to the swing interaction framework, whether the current use scenario is the collaboration scenario.

The electronic device further includes a lock screen service located at the application framework layer. The swing interaction framework may send a fourth scenario query request to the lock screen service. In response to the fourth scenario query request, the lock screen service returns, to the swing interaction framework, whether the current use scenario is the lock screen scenario.

The electronic device further includes a Settings application located at an application layer. The swing interaction framework may send a fifth scenario query request to the Settings application. In response to the fifth scenario query request, the Settings application returns, to the swing interaction framework, whether the current use scenario is the screen reading function use scenario.

The electronic device further includes a Phone Manager application located at the application layer. The swing interaction framework may send a sixth scenario query request to the Phone Manager application. In response to the sixth scenario query request, the Phone Manager application returns, to the swing interaction framework, whether the current use scenario is the power saving mode use scenario.

It may be understood that several possible scenarios that do not belong to the event response scenario are provided above, and these scenarios that do not belong to the event response scenario do not constitute a specific limitation on this embodiment of this application. In this embodiment of this application, scenarios that do not belong to the event response scenario may be more or less than those described above.

S510: The swing interaction framework sends the gaze success event corresponding to the Messages application to the system interface application when the use scenario of the electronic device belongs to the event response scenario.

S511: The system interface application expands the banner notification corresponding to the Messages application in response to the gaze success event corresponding to the Messages application.

When the swing interaction framework determines that the use scenario of the electronic device belongs to the event response scenario, the swing interaction framework may send the gaze success event corresponding to the Messages application to the system interface application. The system interface application automatically expands the banner notification corresponding to the Messages application in response to the gaze success event corresponding to the Messages application, so that a user learns of all message content of the banner notification corresponding to the Messages application.

In this way, when the electronic device receives the banner notification corresponding to the Messages application, the user may gaze at the first preset region corresponding to the Messages application, so that the electronic device automatically expands the banner notification corresponding to the Messages application, thereby reducing cumbersomeness of a user operation, and improving user experience.

An operation of sending the gaze success event corresponding to the Messages application to the system interface application by the swing interaction framework, so that the system interface application expands the banner notification corresponding to the Messages application in response to the gaze success event corresponding to the Messages application is provided above. Certainly, in some other embodiments, the swing interaction framework may alternatively perform mapping in response to the gaze success event corresponding to the Messages application, to obtain a touch event, for example, a tap event for the banner notification corresponding to the Messages application, and send the touch event obtained through mapping to the input manager service. The input manager service sends the touch event to the system interface application, so that the system interface application expands the banner notification corresponding to the Messages application based on the touch event.

In this embodiment of this application, the human eye gaze event information corresponding to the Messages application may alternatively be a gaze fail event. After the smart sensing service sends the gaze fail event corresponding to the Messages application to the swing interaction framework, the swing interaction framework may send the gaze fail event corresponding to the Messages application to the system interface application. In response to the gaze fail event corresponding to the Messages application, the system interface application may automatically collapse the banner notification corresponding to the Messages application after controlling the screen to display the banner notification corresponding to the Messages application for a period of time. Then, the system interface application may perform deregistration with the swing interaction framework, to deregister the human eye sensing fence corresponding to the Messages application.

It may be understood that, after S511, the method further includes: When the smart sensing service determines that the human eye gaze location leaves the first preset region, the smart sensing service sends a gaze finish event to the swing interaction framework; the swing interaction framework sends the gaze finish event to the system interface application; and the system interface application collapses the banner notification corresponding to the Messages application in response to the gaze finish event.

After the system interface application expands the banner notification corresponding to the Messages application in response to the gaze success event corresponding to the Messages application, the user may learn of all the message content of the banner notification corresponding to the Messages application. After the user checks all the message content of the banner notification corresponding to the Messages application, the human eye gaze location of the user may move away from the first preset region. In this case, the smart sensing service determines, based on the human eye gaze location and the human eye sensing fence corresponding to the Messages application, that the human eye gaze event information corresponding to the Messages application is a gaze finish event.

The smart sensing service may send the gaze finish event corresponding to the Messages application to the swing interaction framework, and the swing interaction framework sends the gaze finish event corresponding to the Messages application to the system interface application. The system interface application automatically collapses the banner notification corresponding to the Messages application in response to the gaze finish event corresponding to the Messages application. Then, the system interface application may perform deregistration with the swing interaction framework, to deregister the human eye sensing fence corresponding to the Messages application.

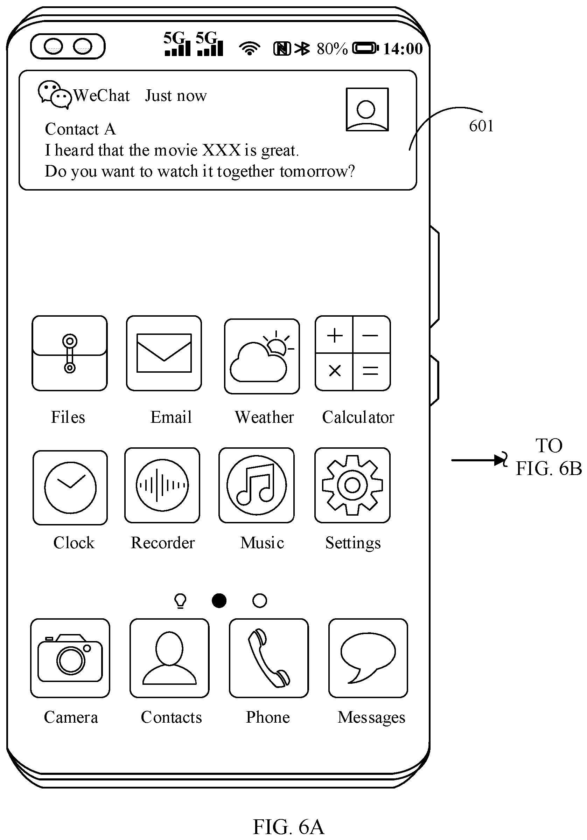

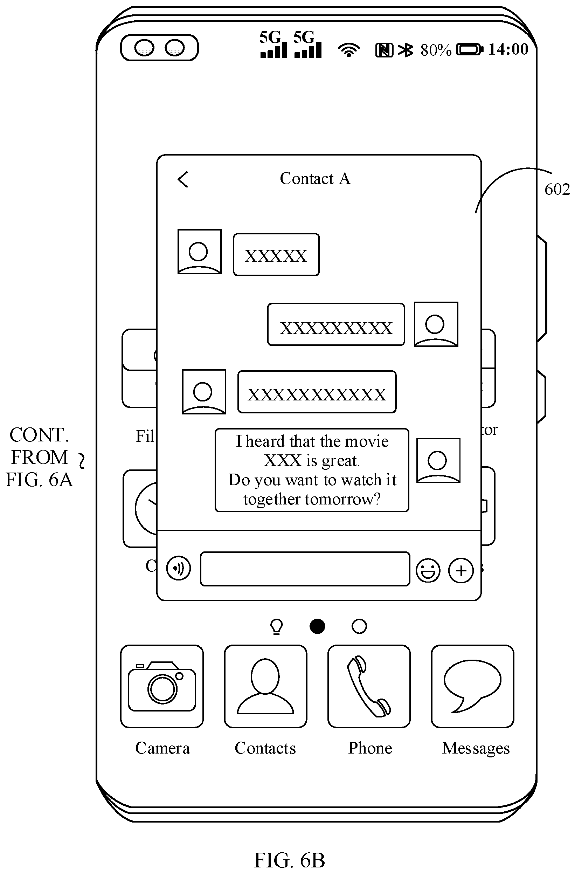

The banner notification scenario corresponding to the third-party communication application is used as an example. For example, as shown in FIG. 6A, icons of a plurality of installed applications, for example, icons of applications such as Files, Email, Weather, Calculator, Clock, Recorder, Music, and Settings, are displayed on the home screen of the electronic device. In a process in which the electronic device displays the home screen, when the electronic device receives a banner notification corresponding to the third-party communication application, a banner notification 601 that corresponds to the third-party communication application and that is shown in FIG. 6A may pop up on a screen.

The banner notification 601 corresponding to the third-party communication application may be displayed at a top location of the screen. The banner notification 601 corresponding to the third-party communication application may include a name (for example, a WeChat application) and an icon of a message source application, a time at which the banner notification is generated, information about a banner notification sender (for example, information such as a name Contact A of a sender and a head portrait of the sender), and message content of the banner notification (for example, "I heard that the movie XXX is great. Do you want to watch it together tomorrow?").

When a user wants to check or reply the message content of the banner notification 601 corresponding to the third-party communication application, the user may gaze at a region in which the banner notification 601 of the third-party communication application is located, so that the electronic device enables the third-party communication application and displays detailed information of the banner notification 601 corresponding to the third-party communication application in a manner of a floating window 602.

Information displayed in the floating window 602 includes information such as the name of the banner notification sender (for example, the Contact A), the message content of the banner notification 601 of the third-party communication application, and historical chatting records between the user and the banner notification sender. In addition, the floating window 602 further includes a dialog box. The dialog box is used to receive content entered by the user, to reply, in the dialog box, the banner notification 601 corresponding to the third-party communication application.

It may be understood that, when the user gazes at the region in which the banner notification 601 of the third-party communication application is located, the electronic device may alternatively enable the third-party communication application and directly display a chatting interface between the user and the banner notification sender in the third-party communication application in a full screen.

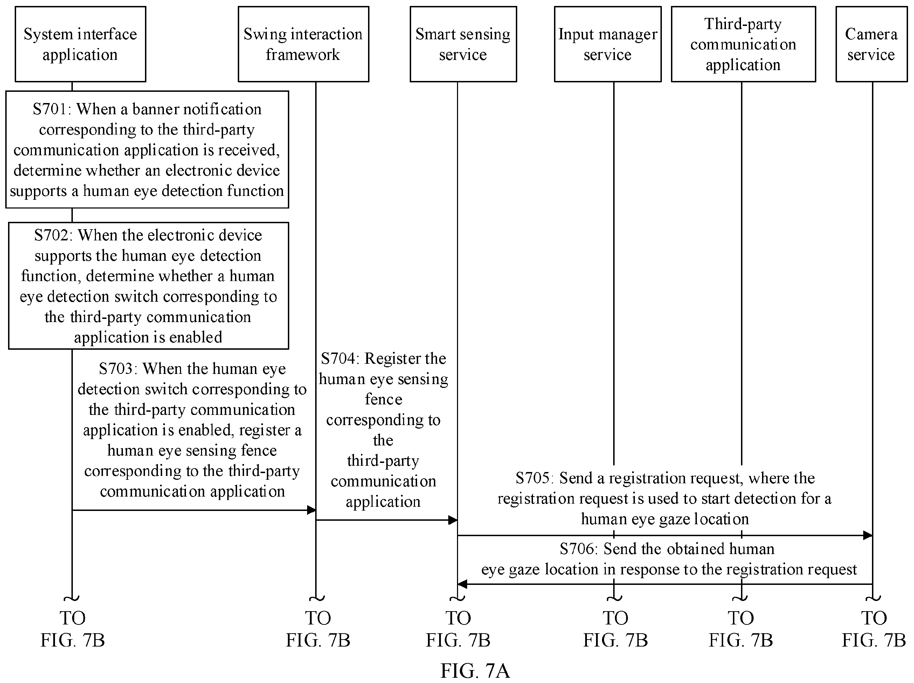

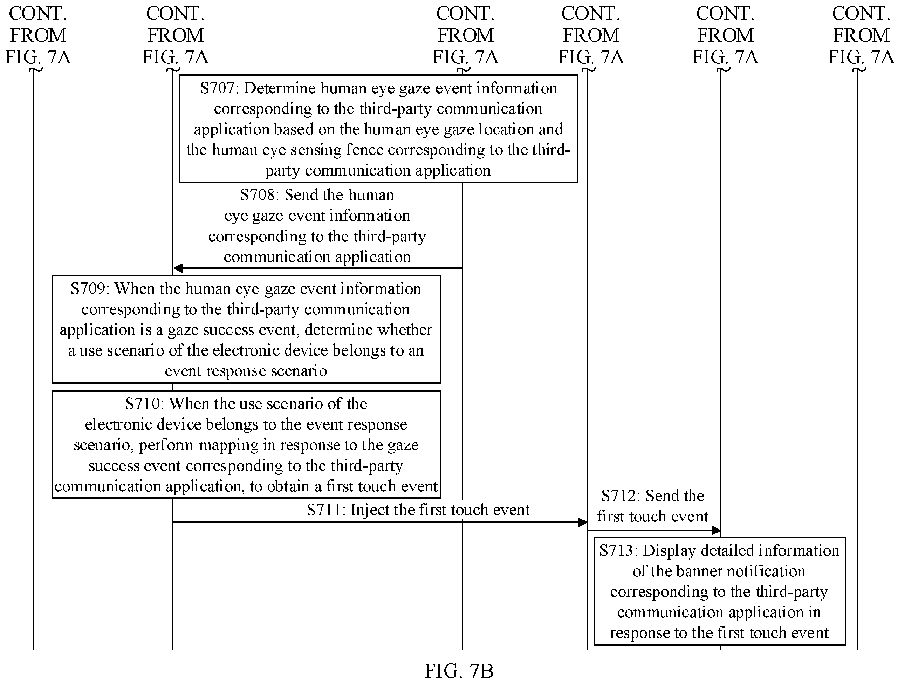

For example, FIG. 7A and FIG. 7B are a schematic diagram of module interaction of a human eye detection-based control method in a banner notification scenario of a third-party communication application according to an embodiment of this application. Refer to FIG. 7A and FIG. 7B. An electronic device may include a system interface application, a swing interaction framework, a smart sensing service, an input manager service, a third-party communication application, and a camera service. The human eye detection-based control method may specifically include the following steps.

S701: When the system interface application receives a banner notification corresponding to the third-party communication application, the system interface application determines whether the electronic device supports a human eye detection function.

S702: When the electronic device supports the human eye detection function, the system interface application determines whether a human eye detection switch corresponding to the third-party communication application is enabled.

In some embodiments, when the system interface application receives the banner notification corresponding to the third-party communication application, the system interface application may determine, by reading a configuration item in the electronic device, whether the electronic device supports the human eye detection function.

When the system interface application determines that the electronic device supports the human eye detection function, the system interface application may further determine whether the human eye detection switch corresponding to the third-party communication application is enabled. Specifically, the system interface application may determine, by invoking a setting interface, whether the human eye detection switch corresponding to the third-party communication application is enabled.

It should be noted that, in the banner notification scenario of the third-party communication application, when the system interface application receives the banner notification corresponding to the third-party communication application, the system interface application may determine, without determining whether the banner notification corresponding to the third-party communication application is an expandable banner notification, whether the electronic device supports the human eye detection function. Alternatively, in the banner notification scenario of the third-party communication application, the system interface application may alternatively determine whether the banner notification corresponding to the third-party communication application is an expandable banner notification, and only when the banner notification corresponding to the third-party communication application is an expandable banner notification, the system interface application can determine whether the electronic device supports the human eye detection function.

When the system interface application determines that the electronic device does not support the human eye detection function, the electronic device does not need to perform the step of determining whether the human eye detection switch corresponding to the third-party communication application is enabled and a subsequent step in this embodiment of this application.

S703: When the human eye detection switch corresponding to the third-party communication application is enabled, the system interface application registers a human eye sensing fence corresponding to the third-party communication application with the swing interaction framework.

In some embodiments, the swing interaction framework exposes a registration-callback interface to the system interface application. When the system interface application determines that the human eye detection switch corresponding to the third-party communication application is enabled, the system interface application may register, by invoking the registration-callback interface, the human eye sensing fence corresponding to the third-party communication application with the swing interaction framework, to trigger detection for a human eye gaze location.

When the system interface application determines that the human eye detection switch corresponding to the third-party communication application is not enabled, the electronic device does not need to perform the step of registering the human eye sensing fence corresponding to the third-party communication application with the swing interaction framework and a subsequent step in this embodiment of this application.

In this embodiment of this application, the human eye sensing fence corresponding to the third-party communication application is similar to the human eye sensing fence corresponding to the Messages application. The human eye sensing fence corresponding to the third-party communication application also includes a report type and one-time report parameters, and the one-time report parameters also include a first preset region, first preset duration, second preset duration, a report result, and a gaze finish event.

It may be understood that the first preset region corresponding to the third-party communication application may be the same as or different from the first preset region corresponding to the Messages application, the first preset duration corresponding to the third-party communication application may be equal or unequal to the first preset duration corresponding to the Messages application, and the second preset duration corresponding to the third-party communication application may be equal or unequal to the second preset duration corresponding to the Messages application.

S704: The swing interaction framework registers the human eye sensing fence corresponding to the third-party communication application with the smart sensing service.

In some embodiments, the smart sensing service exposes a human eye event sensing fence interface to the swing interaction framework. After the system interface application registers the human eye sensing fence corresponding to the third-party communication application with the swing interaction framework, the swing interaction framework may register, by invoking the human eye event sensing fence interface, the human eye sensing fence corresponding to the third-party communication application with the smart sensing service. The human eye sensing fence that corresponds to the third-party communication application and that is registered with the swing interaction framework by the system interface application is the same as the human eye sensing fence that corresponds to the third-party communication application and that is registered with the smart sensing service by the swing interaction framework.

S705: The smart sensing service sends a registration request to the camera service, where the registration request is used to start detection for a human eye gaze location.

S706: The camera service sends the obtained human eye gaze location to the smart sensing service in response to the registration request.

It should be noted that implementation processes of S705 and S706 are respectively similar to those of S505 and S506. To avoid repetition, details are not described herein again.

S707: The smart sensing service determines human eye gaze event information corresponding to the third-party communication application based on the human eye gaze location and the human eye sensing fence corresponding to the third-party communication application.

After the smart sensing service receives the human eye gaze location sent by the camera service and the human eye sensing fence that corresponds to the third-party communication application and that is registered by the swing interaction framework, the smart sensing service may determine the human eye gaze event information corresponding to the third-party communication application based on the human eye gaze location and the human eye sensing fence corresponding to the third-party communication application. The human eye gaze event information corresponding to the third-party communication application includes a gaze success event, a gaze fail event, and a gaze finish event.

It should be noted that a specific implementation process in which the smart sensing service determines the human eye gaze event information corresponding to the third-party communication application is similar to a specific implementation process in which the smart sensing service determines the human eye gaze event information corresponding to the Messages application. Details are not described herein again.

S708: The smart sensing service sends the human eye gaze event information corresponding to the third-party communication application to the swing interaction framework.

After the smart sensing service determines the human eye gaze event information corresponding to the third-party communication application based on the human eye gaze location and the human eye sensing fence corresponding to the third-party communication application, the smart sensing service sends the human eye gaze event information corresponding to the third-party communication application to the swing interaction framework. In this case, the human eye gaze event information may be a gaze success event or a gaze fail event.

S709: When the human eye gaze event information corresponding to the third-party communication application is a gaze success event, the swing interaction framework determines whether a use scenario of the electronic device belongs to an event response scenario.

In some scenarios of the electronic device, even if the human eye gaze event information corresponding to the third-party communication application is a gaze success event, detailed information of the banner notification corresponding to the third-party communication application is not displayed in response to the gaze success event corresponding to the third-party communication application.

For example, the electronic device may not display the detailed information of the banner notification corresponding to the third-party communication application in response to the gaze success event corresponding to the third-party communication application when the electronic device is in the following scenarios: a floating window scenario, a one-hand mode scenario, a split-screen scenario, an App extender scenario, a touch screen use scenario, an input method use scenario, a collaboration scenario, a lock screen scenario, a screen reading function use scenario, a power saving mode use scenario, and the like.

In some embodiments, when the swing interaction framework determines that the human eye gaze event information corresponding to the third-party communication application is a gaze success event, the swing interaction framework needs to first determine whether the use scenario of the electronic device belongs to the foregoing scenarios in which the gaze success event corresponding to the third-party communication application is not responded to.

When the use scenario of the electronic device belongs to one of the foregoing scenarios in which the gaze success event corresponding to the third-party communication application is not responded to, the swing interaction framework determines that the use scenario of the electronic device does not belong to the event response scenario, and the swing interaction framework does not perform a subsequent step. When the use scenario of the electronic device does not belong to the foregoing scenarios in which the gaze success event corresponding to the third-party communication application is not responded to, the swing interaction framework determines that the use scenario of the electronic device belongs to the event response scenario.

S710: When the use scenario of the electronic device belongs to the event response scenario, the swing interaction framework performs mapping in response to the gaze success event corresponding to the third-party communication application, to obtain a first touch event.

In some embodiments, when the swing interaction framework determines that the use scenario of the electronic device belongs to the event response scenario, the swing interaction framework may perform mapping in response to the gaze success event corresponding to the third-party communication application, to obtain the first touch event.

The first touch event may be a tap event for the banner notification corresponding to the third-party communication application. The tap event for the banner notification corresponding to the third-party communication application may include a down event and an up event. A touch location corresponding to the down event may be referred to as a start touch location, and a touch location corresponding to the up event may be referred to as an end touch location.

In the tap event for the banner notification corresponding to the third-party communication application, coordinates of the start touch location of the down event are consistent with those of the end touch location of the up event. For example, in the tap event for the banner notification corresponding to the third-party communication application, the coordinates of the start touch location of the down event and the end touch location of the up event may be coordinates of a central location of the banner notification corresponding to the third-party communication application.

Certainly, in the tap event for the banner notification corresponding to the third-party communication application, the coordinates of the start touch location of the down event and the end touch location of the up event may alternatively be coordinates of any point of the banner notification corresponding to the third-party communication application. For ease of calculation, the coordinates of the central location of the banner notification corresponding to the third-party communication application may be used as the coordinates of the start touch location and the end touch location.

S711: The swing interaction framework injects the first touch event into the input manager service.

S712: The input manager service sends the first touch event to the third-party communication application.

S713: The third-party communication application displays detailed information of the banner notification corresponding to the third-party communication application in response to the first touch event.

After the swing interaction framework performs mapping in response to the gaze success event corresponding to the third-party communication application to obtain the first touch event, the swing interaction framework may inject the first touch event into the input manager service, and the input manager service allocates the first touch event to the third-party communication application.

After receiving the first touch event allocated by the input manager service, the third-party communication application is enabled in response to the first touch event, and the detailed information of the banner notification corresponding to the third-party communication application is displayed in a floating window manner or a full-screen manner.

In this way, when the electronic device receives the banner notification corresponding to the third-party communication application, the user may gaze at the first preset region corresponding to the third-party communication application, so that the electronic device automatically displays the detailed information of the banner notification corresponding to the third-party communication application, thereby reducing cumbersomeness of a user operation, and improving user experience.

In this embodiment of this application, the human eye gaze event information corresponding to the third-party communication application may alternatively be a gaze fail event. After the smart sensing service sends the gaze fail event corresponding to the third-party communication application to the swing interaction framework, the swing interaction framework may send the gaze fail event corresponding to the third-party communication application to the system interface application. In response to the gaze fail event corresponding to the third-party communication application, the system interface application may automatically collapse the banner notification corresponding to the third-party communication application after controlling the screen to display the banner notification corresponding to the third-party communication application for a period of time. Then, the system interface application may perform deregistration with the swing interaction framework, to deregister the human eye sensing fence corresponding to the third-party communication application.

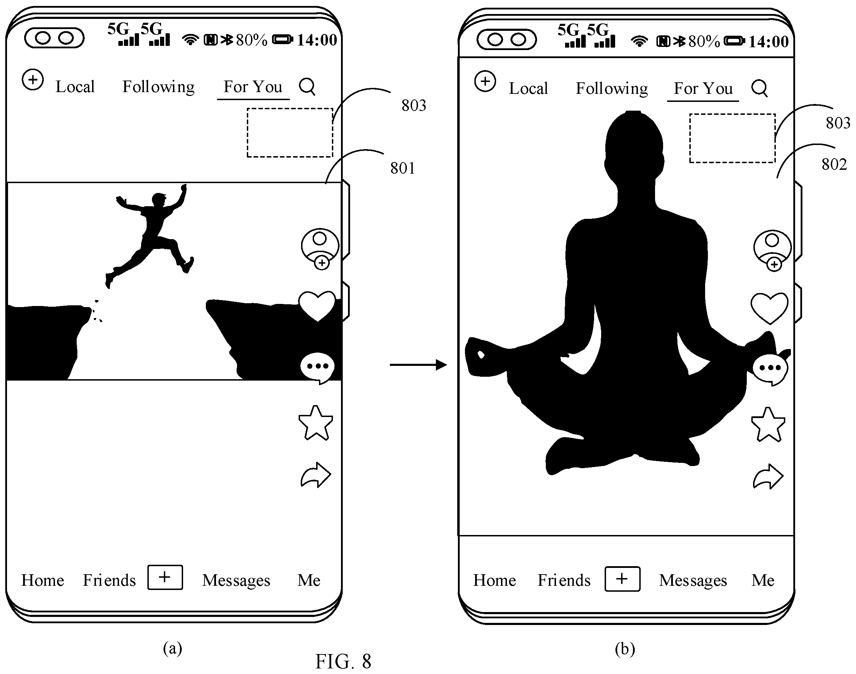

The video page flipping scenario corresponding to the short video application is used as an example. For example, as shown in (a) of FIG. 8, after the short video application in the electronic device is enabled, a first video 801 may be played in a video playback interface of the short video application. In addition, the video playback interface of the short video application may further include: a View control that is used to view publisher information corresponding to the first video 801, a Like control that is used to praise the first video 801, a Comment control that is used to enter a corresponding comment for the first video 801, a Favorite control that is used to collect the first video 801, and a Share control that is used to share the first video 801.

When a user wants to switch the currently played first video 801 to play a next video, the user may gaze at a first preset region corresponding to the short video application (for example, at a top-right corner 803 in the video playback interface of the short video application), so that the electronic device switches the currently played first video 801 shown in (a) of FIG. 8, to play a second video 802 shown in (b) of FIG. 8, thereby implementing video page flipping.

After the electronic device switches to play the second video 802 shown in (b) of FIG. 8, when the user wants to switch the played second video 802 to play a next video again, the user may gaze at the first preset region corresponding to the short video application again (for example, at the top-right corner 803 in the video playback interface of the short video application), so that the electronic device switches the played second video 802 to the next video.

It may be understood that a video played in the short video application may be video content with short duration, for example, duration of each of the first video 801 and the second video 802 is less than preset video duration.

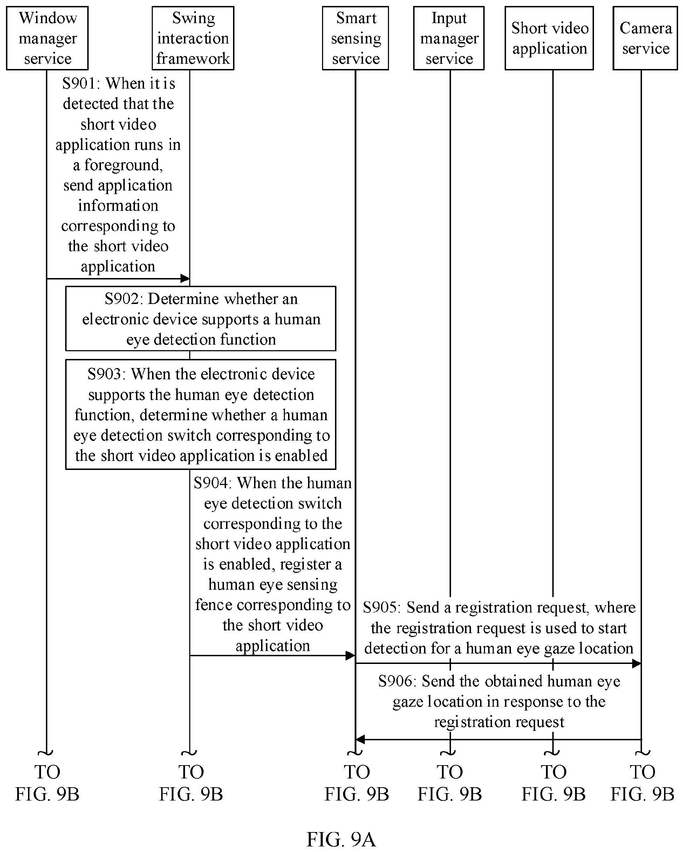

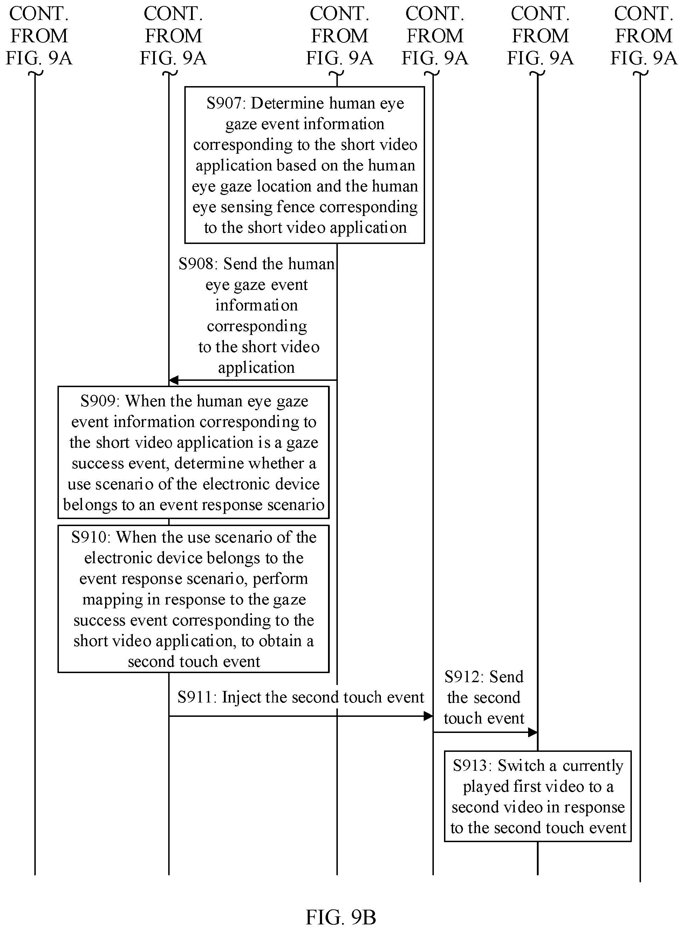

For example, FIG. 9A and FIG. 9B are a schematic diagram of module interaction of a human eye detection-based control method in a video switching scenario of a short video application according to an embodiment of this application. Refer to FIG. 9A and FIG. 9B. An electronic device may include a window manager service, a swing interaction framework, a smart sensing service, an input manager service, a short video application, and a camera service. The human eye detection-based control method may specifically include the following steps.

S901: When the window manager service senses that the short video application runs in a foreground, the window manager service sends application information corresponding to the short video application to the swing interaction framework.

In some embodiments, the window manager service may identify a status of an application. When the window manager service detects that the short video application runs in the foreground of the electronic device, the window manager service may send the application information corresponding to the short video application to the swing interaction framework, to trigger detection for a human eye gaze location. The application information corresponding to the short video application may include an application identifier corresponding to the short video application, for example, information such as an application name.

S902: The swing interaction framework determines whether the electronic device supports a human eye detection function.

After the swing interaction framework receives the application information that corresponds to the short video application and that is sent by the window manager service, the swing interaction framework may determine whether the electronic device supports the human eye detection function. Specifically, the swing interaction framework may determine, by reading a configuration item in the electronic device, whether the electronic device supports the human eye detection function.

S903: When the electronic device supports the human eye detection function, the swing interaction framework determines whether a human eye detection switch corresponding to the short video application is enabled.

S904: When the human eye detection switch corresponding to the short video application is enabled, the swing interaction framework registers a human eye sensing fence corresponding to the short video application with the smart sensing service.

In some embodiments, when the swing interaction framework determines that the electronic device supports the human eye detection function, the swing interaction framework may further determine whether the human eye detection switch corresponding to the short video application is enabled. When the swing interaction framework determines that the human eye detection switch corresponding to the short video application is enabled, the swing interaction framework may register, by invoking a human eye event sensing fence interface, the human eye sensing fence corresponding to the short video application with the smart sensing service.

When the swing interaction framework determines that the electronic device does not support the human eye detection function, the electronic device does not need to perform the step of determining whether the human eye detection switch corresponding to the short video application is enabled and a subsequent step in this embodiment of this application. When the swing interaction framework determines that the human eye detection switch corresponding to the short video application is not enabled, the electronic device does not need to perform the step of registering the human eye sensing fence corresponding to the short video application with the smart sensing service and a subsequent step in this embodiment of this application.

In this embodiment of this application, the human eye sensing fence corresponding to the short video application is similar to the human eye sensing fence corresponding to the Messages application. The human eye sensing fence corresponding to the short video application also includes a report type and one-time report parameters, and the one-time report parameters also include a first preset region, first preset duration, second preset duration, a report result, and a gaze finish event.

It may be understood that the first preset region corresponding to the short video application may be different from the first preset region corresponding to the Messages application, for example, the first preset region corresponding to the short video application is a top-right region of the screen, and the first preset region corresponding to the Messages application may be a region in which the banner notification of the Messages application is located. The first preset duration corresponding to the short video application may be equal or unequal to the first preset duration corresponding to the Messages application; and the second preset duration corresponding to the short video application may be equal or unequal to the second preset duration corresponding to the Messages application.

S905: The smart sensing service sends a registration request to the camera service, where the registration request is used to start detection for a human eye gaze location.

S906: The camera service sends the obtained human eye gaze location to the smart sensing service in response to the registration request.

It should be noted that implementation processes of S905 and S906 are respectively similar to those of S505 and S506. To avoid repetition, details are not described herein again.

S907: The smart sensing service determines human eye gaze event information corresponding to the short video application based on the human eye gaze location and the human eye sensing fence corresponding to the short video application.

After the smart sensing service receives the human eye gaze location sent by the camera service and the human eye sensing fence that corresponds to the short video application and that is registered by the swing interaction framework, the smart sensing service may determine the human eye gaze event information corresponding to the short video application based on the human eye gaze location and the human eye sensing fence corresponding to the short video application. The human eye gaze event information corresponding to the short video application includes a gaze success event, a gaze fail event, and a gaze finish event.

It should be noted that a specific implementation process in which the smart sensing service determines the human eye gaze event information corresponding to the short video application is similar to a specific implementation process in which the smart sensing service determines the human eye gaze event information corresponding to the Messages application. Details are not described herein again.

S908: The smart sensing service sends the human eye gaze event information corresponding to the short video application to the swing interaction framework.

After the smart sensing service determines the human eye gaze event information corresponding to the short video application based on the human eye gaze location and the human eye sensing fence corresponding to the short video application, the smart sensing service sends the human eye gaze event information corresponding to the short video application to the swing interaction framework. In this case, the human eye gaze event information may be a gaze success event or a gaze fail event.

S909: When the human eye gaze event information corresponding to the short video application is a gaze success event, the swing interaction framework determines whether a use scenario of the electronic device belongs to an event response scenario.

In some scenarios of the electronic device, even if the human eye gaze event information corresponding to the short video application is a gaze success event, video page flipping is not performed in response to the gaze success event corresponding to the short video application.

For example, the electronic device may not perform video page flipping in response to the gaze success event corresponding to the short video application when the electronic device is in the following scenarios: a floating window scenario, a one-hand mode scenario, a split-screen scenario, an App extender scenario, a touch screen use scenario, an input method use scenario, a collaboration scenario, a lock screen scenario, a screen reading function use scenario, a power saving mode use scenario, and the like.

In some embodiments, when the swing interaction framework determines that the human eye gaze event information corresponding to the short video application is a gaze success event, the swing interaction framework needs to first determine whether the use scenario of the electronic device belongs to the foregoing scenarios in which the gaze success event corresponding to the short video application is not responded to.

When the use scenario of the electronic device belongs to one of the foregoing scenarios in which the gaze success event corresponding to the short video application is not responded to, the swing interaction framework determines that the use scenario of the electronic device does not belong to the event response scenario, and the swing interaction framework does not perform a subsequent step. When the use scenario of the electronic device does not belong to the foregoing scenarios in which the gaze success event corresponding to the short video application is not responded to, the swing interaction framework determines that the use scenario of the electronic device belongs to the event response scenario.

S910: When the use scenario of the electronic device belongs to the event response scenario, the swing interaction framework performs mapping in response to the gaze success event corresponding to the short video application, to obtain a second touch event.

In some embodiments, when the swing interaction framework determines that the use scenario of the electronic device belongs to the event response scenario, the swing interaction framework may perform mapping in response to the gaze success event corresponding to the short video application, to obtain the second touch event.

The second touch event is a flicking event for a video played in the short video application, and the flicking event for the video played in the short video application may be an upward flicking event. The flicking event for the video played in the short video application may include a down event, several move events, and an up event. A touch location corresponding to the down event may be referred to as a start touch location, a touch location corresponding to the move event may be referred to as a middle touch location, and a touch location corresponding to the up event may be referred to as an end touch location.

For example, event duration of the flicking event for the video played in the short video application is 300 ms. The down event may be used as a start event, and the up event is used as an end event. In this process, the swing interaction framework may inject one move event into the input manager service at an interval of 10 ms. A y coordinate of the down event in the flicking event corresponding to the short video application may be located at a lower 1/3 location in a video playback interface of the short video application, and a y coordinate of each subsequent move event is deviated by 300 dp. That is, y coordinates of the down event, the move event, and the up event in the flicking event corresponding to the short video application are inconsistent, but x coordinates may be consistent.

S911: The swing interaction framework injects the second touch event into the input manager service.

S912: The input manager service sends the second touch event to the short video application.

S913: The short video application switches a currently played first video to a second video in response to the second touch event.

After the swing interaction framework performs mapping in response to the gaze success event corresponding to the short video application to obtain the second touch event, the swing interaction framework may inject the second touch event into the input manager service, and the input manager service allocates the second touch event to the short video application.

After receiving the second touch event allocated by the input manager service, the short video application performs switching between videos corresponding to the short video application in response to the second touch event, to switch the currently played first video to the second video, thereby implementing video page flipping.

It may be understood that after the short video application switches the currently played first video to the second video, if the short video application still runs in the foreground, in this case, whether to switch the played second video to a next video may be continuously determined based on the human eye gaze location and the human eye sensing fence corresponding to the short video application. In this process, the swing interaction framework does not need to register the human eye sensing fence corresponding to the short video application with the smart sensing service again.

In this way, the user may gaze at the first preset region corresponding to the short video application, so that the electronic device automatically performs video switching for the short video application, thereby reducing cumbersomeness of a user operation, and improving user experience.

In this embodiment of this application, the human eye gaze event information corresponding to the short video application may alternatively be a gaze fail event, and the smart sensing service may also send the gaze fail event corresponding to the short video application to the swing interaction framework. In this case, when the short video application runs in the foreground, the smart sensing service still continuously obtains the human eye gaze location, and continuously determines the human eye gaze event information corresponding to the short video application based on the human eye gaze location and the human eye sensing fence corresponding to the short video application, until the swing interaction framework performs deregistration with the smart sensing service, to deregister the human eye sensing fence corresponding to the short video application.

When the short video application is disabled or exits the foreground and runs in a background, the swing interaction framework may perform deregistration with the smart sensing service, to deregister the human eye sensing fence corresponding to the short video application.

It should be noted that the video page flipping operation for the short video application may be a downward page flipping operation for the videos, that is, switching a currently played video to a next video. Certainly, the video page flipping operation for the short video application in this embodiment of this application may alternatively be another suitable video page flipping operation, for example, an upward page flipping operation suitable for the videos, that is, switching a currently played video to a previous video. In this case, the second touch event obtained through mapping may be a downward flicking event for the video played in the short video application.

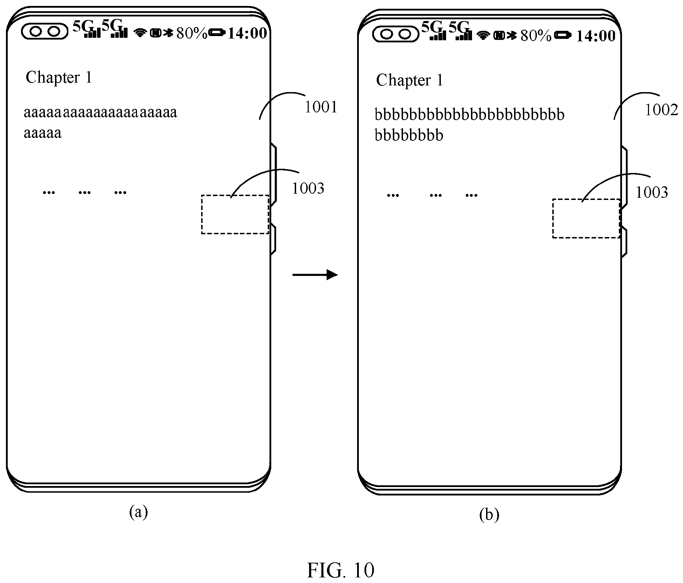

The reading page flipping scenario corresponding to the eBook application is used as an example. For example, as shown in (a) of FIG. 10, a first reading page 1001 may be displayed after the eBook application in the electronic device is enabled. The first reading page 1001 includes some text information of an eBook. Characters "aaa" shown in (a) of FIG. 10 are used to represent text information in the first reading page 1001. Certainly, specific display of the text information in the first reading page 1001 depends on an actual situation.

When a user wants to switch the currently displayed first reading page 1001 to a next reading page, the user may gaze at a first preset region corresponding to the eBook application (for example, at a middle location 1003 on a right side of the reading page of the eBook application), so that the electronic device switches the currently displayed first reading page 1001 shown in (a) of FIG. 10 to display a second reading page 1002 shown in (b) of FIG. 10, thereby implementing reading page flipping. The second reading page 1002 also includes some text information of the eBook. Characters "bbb" shown in (b) of FIG. 10 are used to represent text information in the second reading page 1002.

After the electronic device switches to display the second reading page 1002 shown in (b) of FIG. 10, when the user wants to switch the displayed second reading page 1002 to display a next reading page again, the user may gaze at the first preset region corresponding to the eBook application again (for example, at the middle location 1003 on the right side of the reading page of the eBook application), so that the electronic device switches the displayed second reading page 1002 to the next reading page.

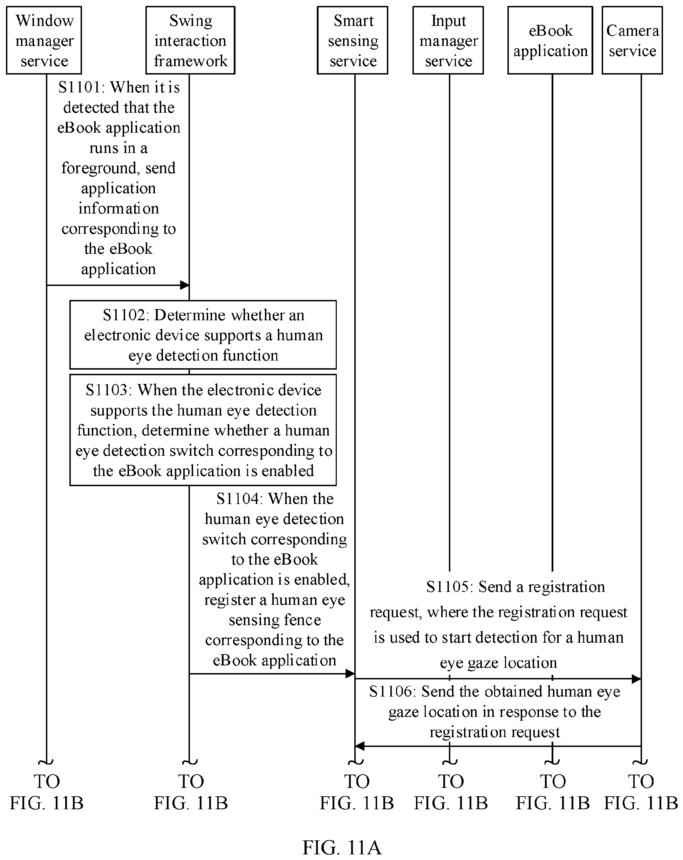

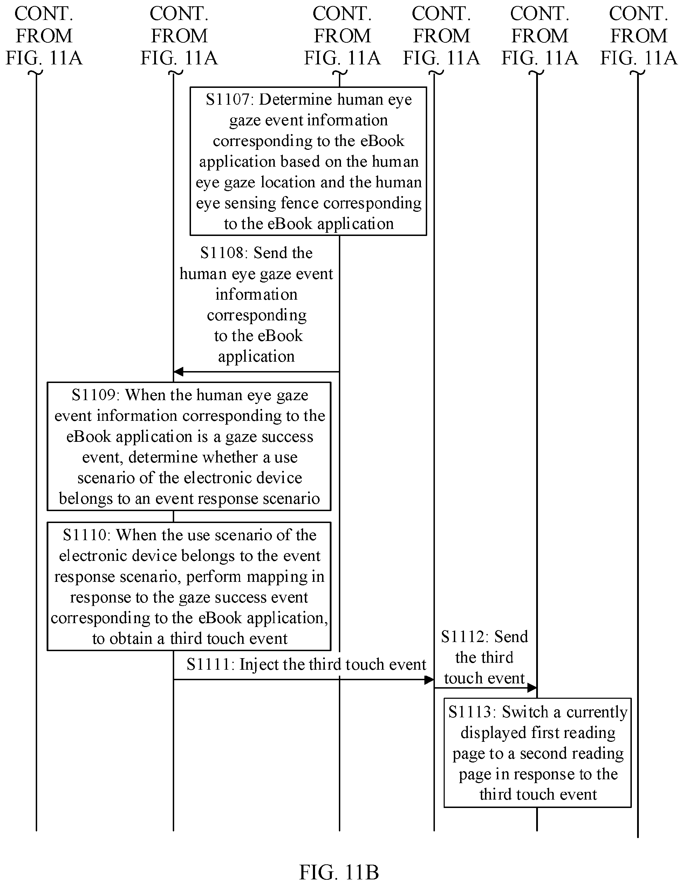

For example, FIG. 11A and FIG. 11B are a schematic diagram of module interaction of a human eye detection-based control method in a reading page flipping scenario of an eBook application according to an embodiment of this application. Refer to FIG. 11A and FIG. 11B. An electronic device may include a window manager service, a swing interaction framework, a smart sensing service, an input manager service, an eBook application, and a camera service. The human eye detection-based control method may specifically include the following steps.

S1101: When the window manager service senses that the eBook application runs in a foreground, the window manager service sends application information corresponding to the eBook application to the swing interaction framework.

In some embodiments, the window manager service may identify a status of an application. When the window manager service detects that the eBook application runs in the foreground of the electronic device, the window manager service may send the application information corresponding to the eBook application to the swing interaction framework, to trigger detection for a human eye gaze location. The application information corresponding to the eBook application may include an application identifier corresponding to the eBook application, for example, information such as an application name.

S1102: The swing interaction framework determines whether the electronic device supports a human eye detection function.

S1103: When the electronic device supports the human eye detection function, the swing interaction framework determines whether a human eye detection switch corresponding to the eBook application is enabled.

S1104: When the human eye detection switch corresponding to the eBook application is enabled, the swing interaction framework registers a human eye sensing fence corresponding to the eBook application with the smart sensing service.

In some embodiments, when the swing interaction framework determines that the electronic device supports the human eye detection function, the swing interaction framework may further determine whether the human eye detection switch corresponding to the eBook application is enabled. When the swing interaction framework determines that the human eye detection switch corresponding to the eBook application is enabled, the swing interaction framework may register, by invoking a human eye event sensing fence interface, the human eye sensing fence corresponding to the eBook application with the smart sensing service.

When the swing interaction framework determines that the electronic device does not support the human eye detection function, the electronic device does not need to perform the step of determining whether the human eye detection switch corresponding to the eBook application is enabled and a subsequent step in this embodiment of this application. When the swing interaction framework determines that the human eye detection switch corresponding to the eBook application is not enabled, the electronic device does not need to perform the step of registering the human eye sensing fence corresponding to the eBook application with the smart sensing service and a subsequent step in this embodiment of this application.

In this embodiment of this application, the human eye sensing fence corresponding to the eBook application is similar to the human eye sensing fence corresponding to the Messages application. The human eye sensing fence corresponding to the eBook application also includes a report type and one-time report parameters, and the one-time report parameters also include a first preset region, first preset duration, second preset duration, a report result, and a gaze finish event.

It may be understood that the first preset region corresponding to the eBook application may be different from the first preset region corresponding to the Messages application, for example, the first preset region corresponding to the eBook application is a middle location on a right side of a reading page of the eBook application, and the first preset region corresponding to the Messages application may be a region in which the banner notification of the Messages application is located. The first preset duration corresponding to the eBook application may be equal or unequal to the first preset duration corresponding to the Messages application; and the second preset duration corresponding to the eBook application may be equal or unequal to the second preset duration corresponding to the Messages application.

S1105: The smart sensing service sends a registration request to the camera service, where the registration request is used to start detection for a human eye gaze location.

S1106: The camera service sends the obtained human eye gaze location to the smart sensing service in response to the registration request.

It should be noted that implementation processes of S1105 and S1106 are respectively similar to those of S505 and S506. To avoid repetition, details are not described herein again.

S1107: The smart sensing service determines human eye gaze event information corresponding to the eBook application based on the human eye gaze location and the human eye sensing fence corresponding to the eBook application.

After the smart sensing service receives the human eye gaze location sent by the camera service and the human eye sensing fence that corresponds to the eBook application and that is registered by the swing interaction framework, the smart sensing service may determine the human eye gaze event information corresponding to the eBook application based on the human eye gaze location and the human eye sensing fence corresponding to the eBook application. The human eye gaze event information corresponding to the eBook application includes a gaze success event, a gaze fail event, and a gaze finish event.

It should be noted that a specific implementation process in which the smart sensing service determines the human eye gaze event information corresponding to the eBook application is similar to a specific implementation process in which the smart sensing service determines the human eye gaze event information corresponding to the Messages application. Details are not described herein again.

S1108: The smart sensing service sends the human eye gaze event information corresponding to the eBook application to the swing interaction framework.

After the smart sensing service determines the human eye gaze event information corresponding to the eBook application based on the human eye gaze location and the human eye sensing fence corresponding to the eBook application, the smart sensing service sends the human eye gaze event information corresponding to the eBook application to the swing interaction framework. In this case, the human eye gaze event information may be a gaze success event or a gaze fail event.

S1109: When the human eye gaze event information corresponding to the eBook application is a gaze success event, the swing interaction framework determines whether a use scenario of the electronic device belongs to an event response scenario.

In some scenarios of the electronic device, even if the human eye gaze event information corresponding to the eBook application is a gaze success event, reading page flipping is not performed in response to the gaze success event corresponding to the eBook application.

For example, the electronic device may not perform reading page flipping in response to the gaze success event corresponding to the eBook application when the electronic device is in the following scenarios: a floating window scenario, a one-hand mode scenario, a split-screen scenario, an App extender scenario, a touch screen use scenario, an input method use scenario, a collaboration scenario, a lock screen scenario, a screen reading function use scenario, a power saving mode use scenario, and the like.

In some embodiments, when the swing interaction framework determines that the human eye gaze event information corresponding to the eBook application is a gaze success event, the swing interaction framework needs to first determine whether the use scenario of the electronic device belongs to the foregoing scenarios in which the gaze success event corresponding to the eBook application is not responded to.

When the use scenario of the electronic device belongs to one of the foregoing scenarios in which the gaze success event corresponding to the eBook application is not responded to, the swing interaction framework determines that the use scenario of the electronic device does not belong to the event response scenario, and the swing interaction framework does not perform a subsequent step. When the use scenario of the electronic device does not belong to the foregoing scenarios in which the gaze success event corresponding to the eBook application is not responded to, the swing interaction framework determines that the use scenario of the electronic device belongs to the event response scenario.

S1110: When the use scenario of the electronic device belongs to the event response scenario, the swing interaction framework performs mapping in response to the gaze success event corresponding to the eBook application, to obtain a third touch event.

In some embodiments, when the swing interaction framework determines that the use scenario of the electronic device belongs to the event response scenario, the swing interaction framework may perform mapping in response to the gaze success event corresponding to the eBook application, to obtain the third touch event.

The third touch event is a flicking operation for a reading page displayed in the eBook application, and the flicking operation for the reading page displayed in the eBook application may be a leftward flicking event. The flicking event for the reading page displayed in the eBook application may include a down event, several move events, and an up event.

For example, event duration of the flicking event for the reading page displayed in the eBook application is 300 ms. The down event may be used as a start event, and the up event is used as an end event. In this process, the swing interaction framework may inject one move event into the input manager service at an interval of 10 ms. An x coordinate of the down event in the flicking event corresponding to the eBook application may be located at an edge on the right side of the reading page of the eBook application, and an x coordinate of each subsequent move event is deviated by a specific distance. That is, x coordinates of the down event, the move event, and the up event in the flicking event corresponding to the eBook application are inconsistent, but y coordinates may be consistent.

S1111: The swing interaction framework injects the third touch event into the input manager service.

S1112: The input manager service sends the third touch event to the eBook application.

S1113: The eBook application switches a currently displayed first reading page to a second reading page in response to the third touch event.

After the swing interaction framework performs mapping in response to the gaze success event corresponding to the eBook application to obtain the third touch event, the swing interaction framework may inject the third touch event into the input manager service, and the input manager service allocates the third touch event to the eBook application.

After receiving the third touch event allocated by the input manager service, the eBook application flips the reading page corresponding to the eBook application in response to the third touch event, to switch the currently displayed first reading page to the second reading page, thereby implementing reading page flipping.

It may be understood that after the eBook application switches the currently displayed first reading page to the second reading page, if the eBook application still runs in the foreground, in this case, whether to switch the displayed second reading page to a next reading page may be continuously determined based on the human eye gaze location and the human eye sensing fence corresponding to the eBook application. In this process, the swing interaction framework does not need to register the human eye sensing fence corresponding to the eBook application with the smart sensing service again.

In this way, the user may gaze at the first preset region corresponding to the eBook application, so that the electronic device automatically flips the reading page corresponding to the eBook application, thereby reducing cumbersomeness of a user operation, and improving user experience.

In this embodiment of this application, the human eye gaze event information corresponding to the eBook application may alternatively be a gaze fail event, and the smart sensing service may also send the gaze fail event corresponding to the eBook application to the swing interaction framework. In this case, when the eBook application runs in the foreground, the smart sensing service still continuously obtains the human eye gaze location, and continuously determines the human eye gaze event information corresponding to the eBook application based on the human eye gaze location and the human eye sensing fence corresponding to the eBook application, until the swing interaction framework performs deregistration with the smart sensing service, to deregister the human eye sensing fence corresponding to the eBook application.

When the eBook application is disabled or exits the foreground and runs in a background, the swing interaction framework may perform deregistration with the smart sensing service, to deregister the human eye sensing fence corresponding to the eBook application.

It should be noted that the reading page flipping operation for the eBook application may be a rightward page flipping operation for the reading page, that is, switching a currently displayed reading page to a next reading page. Certainly, the reading page flipping operation for the eBook application in this embodiment of this application may alternatively be another suitable reading page flipping operation, for example, a leftward page flipping operation for the reading page, that is, switching a currently displayed reading page back to a previous reading page. In this case, the third touch event obtained through mapping may be an upward flicking event for the reading page displayed in the eBook application.

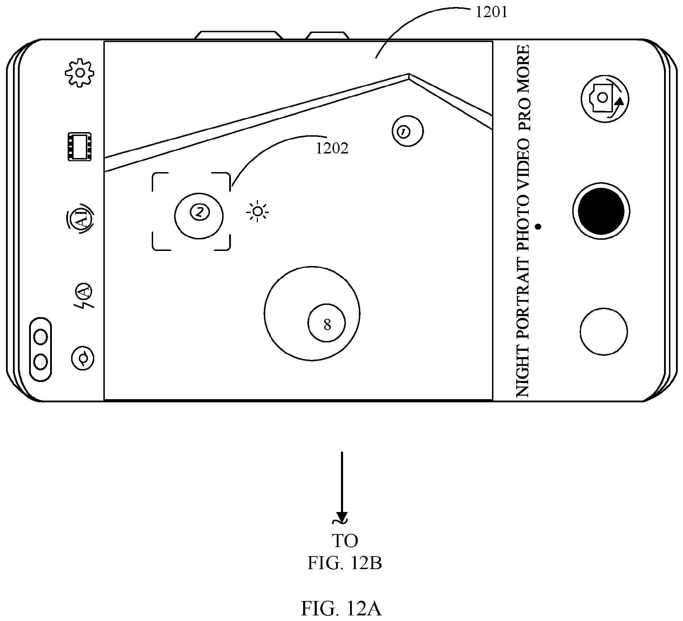

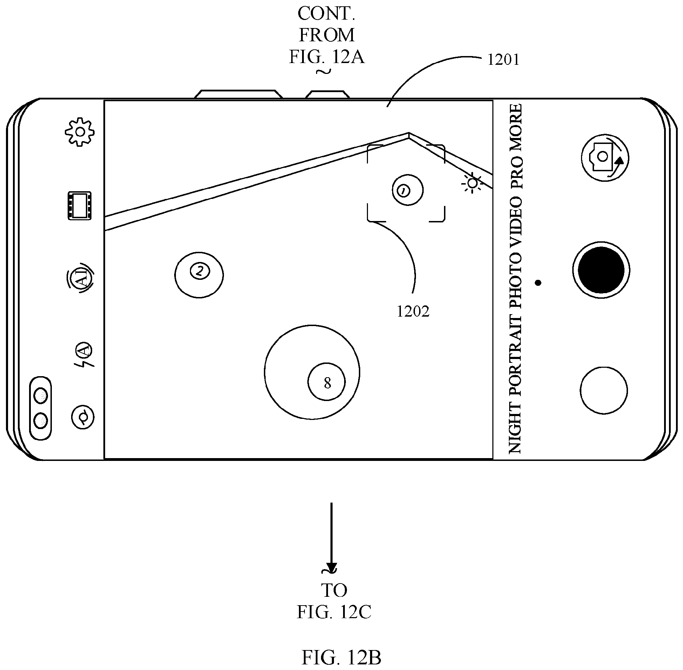

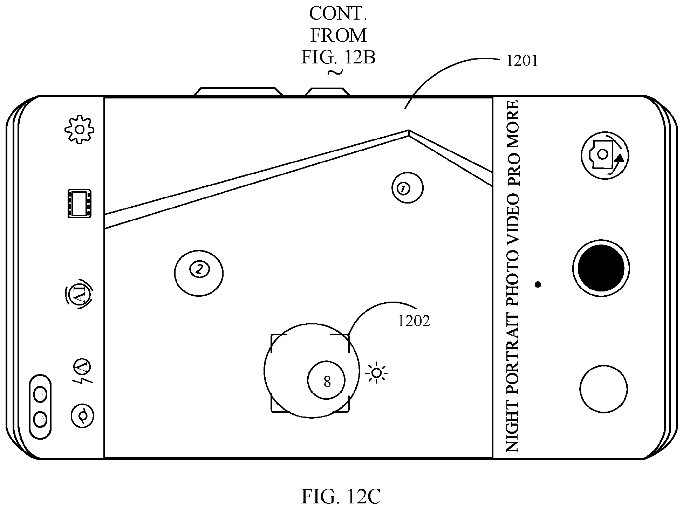

The camera focus tracking scenario is used as an example. For example, a shooting interface shown in FIG. 12Amay be displayed after the Camera application in the electronic device is enabled. The shooting interface includes a viewfinder frame 1201, a shooting control, and a plurality of shooting modes.

The viewfinder frame 1201 is used to display, in real time, image content collected by a camera. For example, the image content is a picture including a plurality of billiards, which are respectively a billiard numbered 1, a billiard numbered 2, a billiard numbered 8, and the like. The shooting modes include a NIGHT mode, a PORTRAIT mode, a PHOTO mode, a VIDEO mode, a PRO mode, and the like.

The viewfinder frame 1201 may include a focus frame 1202. The focus frame 1202 may move with a human eye gaze location of a user in the viewfinder frame 1201, that is, a location of the focus frame 1202 changes with the human eye gaze location of the user.

When the human eye gaze location of the user is located at a location in which the billiard numbered 2 is located, as shown in FIG. 12A, the focus frame 1202 also moves to the location in which the billiard numbered 2 is located, and the electronic device may focus on the billiard numbered 2 in the focus frame 1202, so that an image in the focus frame 1202 is clearer.

When the human eye gaze location of the user moves to a location in which the billiard numbered 1 is located, as shown in FIG. 12B, the focus frame 1202 also moves to the location in which the billiard numbered 1 is located, and the electronic device may switch a focus to focus on the billiard numbered 1 in the focus frame 1202, so that an image in the focus frame 1202 is clearer.

When the human eye gaze location of the user moves to a location in which the billiard numbered 8 is located, as shown in FIG. 12C, the focus frame 1202 moves to the location in which the billiard numbered 8 is located, and the electronic device may switch a focus again to focus on the billiard numbered 8 in the focus frame 1202, so that an image in the focus frame 1202 is clearer.

Therefore, the electronic device may perform automatic focus tracking based on the human eye gaze location in a process of using the Camera application for shooting. Focus tracking refers to a process of continuously performing focusing in a subsequent shooting process after the camera focuses on a photographed object.

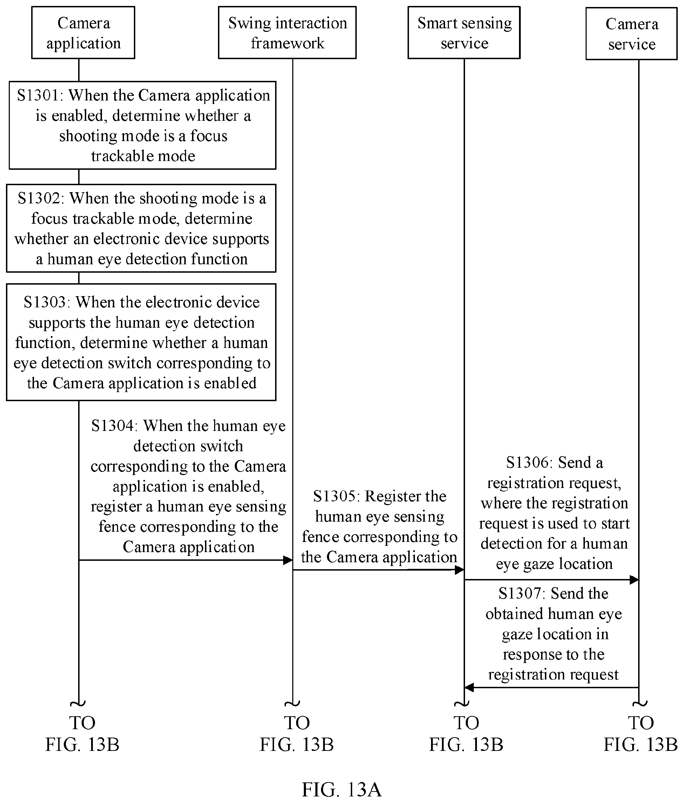

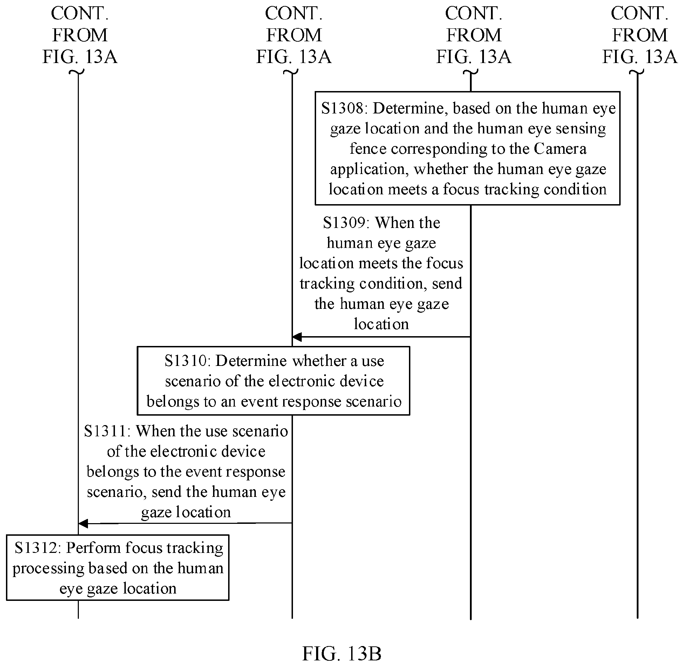

For example, FIG. 13A and FIG. 13B are a schematic diagram of module interaction of a focus tracking method in a camera focus tracking scenario according to an embodiment of this application. Refer to FIG. 13A and FIG. 13B. An electronic device may include a Camera application, a swing interaction framework, a smart sensing service, and a camera service. The focus tracking method may include the following steps.

S1301: When the Camera application is enabled, the Camera application determines whether a shooting mode is a focus trackable mode.

In some embodiments, the Camera application includes a plurality of different shooting modes, for example, a PANORAMA mode, a NIGHT mode, a PORTRAIT mode, a PHOTO mode, and a VIDEO mode. Some of the shooting modes may support eye movement focus tracking, and the shooting modes supporting eye movement focus tracking are referred to as focus trackable modes; and some of the shooting modes do not support eye movement focus tracking, and the shooting modes that do not support eye movement focus tracking are referred to as focus non-trackable modes. For example, the PANORAMA mode is a focus non-trackable mode, and the NIGHT mode, the PORTRAIT mode, the PHOTO mode, and the VIDEO mode are all focus trackable modes.

Therefore, after the Camera application is enabled, the Camera application may determine whether a current shooting mode is a focus trackable mode.

S1302: When the shooting mode is a focus trackable mode, the Camera application determines whether the electronic device supports a human eye detection function.

When the Camera application determines that the current shooting mode is a focus trackable mode, the Camera application may determine whether the electronic device supports the human eye detection function. Specifically, the Camera application may determine, by reading a configuration item in the electronic device, whether the electronic device supports the human eye detection function.

S1303: When the electronic device supports the human eye detection function, the Camera application determines whether a human eye detection switch corresponding to the Camera application is enabled.

In some embodiments, when the Camera application determines that the electronic device supports the human eye detection function, the Camera application may further determine whether the human eye detection switch corresponding to the Camera application is enabled. Specifically, the Camera application may determine, by invoking a setting interface, whether the human eye detection switch corresponding to the Camera application is enabled.

When the Camera application determines that the electronic device does not support the human eye detection function, the electronic device does not need to perform the step of determining whether the human eye detection switch corresponding to the Camera application is enabled and a subsequent step in this embodiment of this application.

S1304: When the human eye detection switch corresponding to the Camera application is enabled, the Camera application registers a human eye sensing fence corresponding to the Camera application with the swing interaction framework.

In some embodiments, when it is determined that the human eye detection switch corresponding to the Camera application is enabled, the Camera application may trigger detection for a human eye gaze location. In this case, the Camera application may register the human eye sensing fence corresponding to the Camera application with the swing interaction framework.

When the Camera application determines that the human eye detection switch corresponding to the Camera application is not enabled, the electronic device does not need to perform the step of registering the human eye sensing fence corresponding to the Camera application with the swing interaction framework and a subsequent step in this embodiment of this application.

In this embodiment of this application, the human eye sensing fence corresponding to the Camera application includes a report type and report parameters. The report type of the human eye sensing fence corresponding to the Camera application is continuous report. For example, data of the report type of the Camera application may be report type: 5, which represents that the report type of the Camera application is continuous report.

The report parameters in the human eye sensing fence corresponding to the Camera application are continuous report parameters, which include an event report frequency, a second preset region, coordinates that are of the human eye gaze location and that need to be carried during event reporting, and a gaze exit event.

The event report frequency refers to a frequency at which the smart sensing service reports the human eye gaze location to the swing interaction framework, and a frequency at which the swing interaction framework reports the human eye gaze location to the Camera application. For example, the event report frequency corresponding to the Camera application may be 15 times/second, 16 times/second, or the like.

The second preset region may also be represented by reportRegion(frameLeft, frameTop)(frameRight, frameBottom)(xxx, xxx)(xxx, xxx), which includes horizontal and vertical coordinates at a top-left corner and horizontal and vertical coordinates at a bottom-right corner of the specified second preset region. For example, the second preset region corresponding to the Camera application may be a region in which a viewfinder frame is located.

It may be understood that sizes of corresponding viewfinder frames may be the same when the Camera application is in different shooting modes, and corresponding second preset regions may be the same; or sizes of corresponding viewfinder frames may be different when the Camera application is in different shooting modes, and corresponding second preset regions may be different.

The coordinates that are of the human eye gaze location and that need to be carried during event reporting are used to indicate the smart sensing service to report the human eye gaze location to the swing interaction framework, and indicate the swing interaction framework to report the human eye gaze location to the Camera application.

The gaze exit event (gazeExitEvent) represents an event that needs to be reported when a user does not gaze at the second preset region.

S1305: The swing interaction framework registers the human eye sensing fence corresponding to the Camera application with the smart sensing service.

In some embodiments, the smart sensing service exposes a human eye event sensing fence interface to the swing interaction framework. After the Camera application registers the human eye sensing fence corresponding to the Camera application with the swing interaction framework, the swing interaction framework may register, by invoking the human eye event sensing fence interface, the human eye sensing fence corresponding to the Camera application with the smart sensing service. The human eye sensing fence that corresponds to the Camera application and that is registered with the swing interaction framework by the Camera application is the same as the human eye sensing fence that corresponds to the Camera application and that is registered with the smart sensing service by the swing interaction framework.

S1306: The smart sensing service sends a registration request to the camera service, where the registration request is used to start detection for a human eye gaze location.

S1307: The camera service sends the obtained human eye gaze location to the smart sensing service in response to the registration request.

It should be noted that implementation processes of S1306 and S1307 are respectively similar to those of S505 and S506. To avoid repetition, details are not described herein again.

S1308: The smart sensing service determines, based on the human eye gaze location and the human eye sensing fence corresponding to the Camera application, whether the human eye gaze location meets a focus tracking condition.

After the smart sensing service receives the human eye gaze location sent by the camera service and the human eye sensing fence that corresponds to the Camera application and that is registered by the swing interaction framework, the smart sensing service determines, based on the human eye gaze location and the human eye sensing fence corresponding to the Camera application, whether the human eye gaze location meets the focus tracking condition.

In a possible implementation, the smart sensing service may determine, in the following manner, whether the human eye gaze location meets the focus tracking condition: The smart sensing service compares the human eye gaze location with the second preset region to determine whether the human eye gaze location is located in the second preset region; when the smart sensing service determines that the human eye gaze location is located in the second preset region, the smart sensing service determines that the human eye gaze location meets the focus tracking condition; and when the smart sensing service determines that the human eye gaze location is located outside the second preset region, the smart sensing service determines that the human eye gaze location does not meet the focus tracking condition.

S1309: When the human eye gaze location meets the focus tracking condition, the smart sensing service sends the human eye gaze location to the swing interaction framework.

After the smart sensing service determines, based on the human eye gaze location and the human eye sensing fence corresponding to the Camera application, that the human eye gaze location meets the focus tracking condition, the smart sensing service sends the human eye gaze location to the swing interaction framework.

In a possible implementation, the smart sensing service sends the human eye gaze location to the swing interaction framework at the event report frequency.

It should be noted that the human eye gaze location sent by the smart sensing service to the swing interaction framework may be the human eye gaze location reported by the camera service or may be a human eye gaze location obtained after coordinate transformation is performed on the human eye gaze location reported by the camera service.

S1310: The swing interaction framework determines whether a use scenario of the electronic device belongs to an event response scenario.

In some scenarios of the electronic device, even if the human eye gaze location meets the focus tracking condition, focus tracking processing is not performed in response to the human eye gaze location.

For example, the electronic device may not perform focus tracking processing in response to the human eye gaze location when the electronic device is in the following scenarios: a floating window scenario, a one-hand mode scenario, a split-screen scenario, an App extender scenario, a touch screen use scenario, an input method use scenario, a collaboration scenario, a lock screen scenario, a screen reading function use scenario, a power saving mode use scenario, and the like.

In some embodiments, after the swing interaction framework receives the human eye gaze location sent by the smart sensing service, the swing interaction framework needs to first determine whether the use scenario of the electronic device belongs to the foregoing scenarios in which focus tracking processing is not performed in response to the human eye gaze location.

When the use scenario of the electronic device belongs to one of the foregoing scenarios in which focus tracking processing is not performed in response to the human eye gaze location, the swing interaction framework determines that the use scenario of the electronic device does not belong to the event response scenario, and the swing interaction framework does not perform a subsequent step. When the use scenario of the electronic device does not belong to the foregoing scenarios in which focus tracking processing is not performed in response to the human eye gaze location, the swing interaction framework determines that the use scenario of the electronic device belongs to the event response scenario.

S1311: The swing interaction framework sends the human eye gaze location to the Camera application when the use scenario of the electronic device belongs to the event response scenario.

In some embodiments, when the swing interaction framework determines that the use scenario of the electronic device belongs to the event response scenario, the swing interaction framework may send the human eye gaze location to the Camera application.

In a possible implementation, the swing interaction framework sends the human eye gaze location to the Camera application at the event report frequency.

S1312: The Camera application performs focus tracking processing based on the human eye gaze location.

In some embodiments, after receiving the human eye gaze location sent by the swing interaction framework, the Camera application performs focus tracking processing based on the human eye gaze location.

In this embodiment of this application, after the smart sensing service determines, based on the human eye gaze location and the human eye sensing fence corresponding to the Camera application, that the human eye gaze location does not meet the focus tracking condition, that is, when the user does not gaze at the second preset region, the smart sensing service sends the gaze exit event to the swing interaction framework at the event report frequency, and then the swing interaction framework sends the gaze exit event to the Camera application at the event report frequency.

In this way, the user may gaze at any location in the viewfinder frame in a process of using the Camera application for shooting, so that the electronic device can perform automatic focus tracking based on the human eye gaze location, thereby reducing cumbersomeness of a user operation, and improving user experience.

During use of the electronic device, because the human eye detection-based control method is applicable to many scenarios, when the short video application, the eBook application, and the Camera application in the electronic device are used, the electronic device may receive a banner notification (a banner notification corresponding to the Messages application or a banner notification corresponding to the third-party communication application).

In this case of scenario conflict, an event that needs to be processed preferentially may be determined based on a priority in this embodiment of this application.

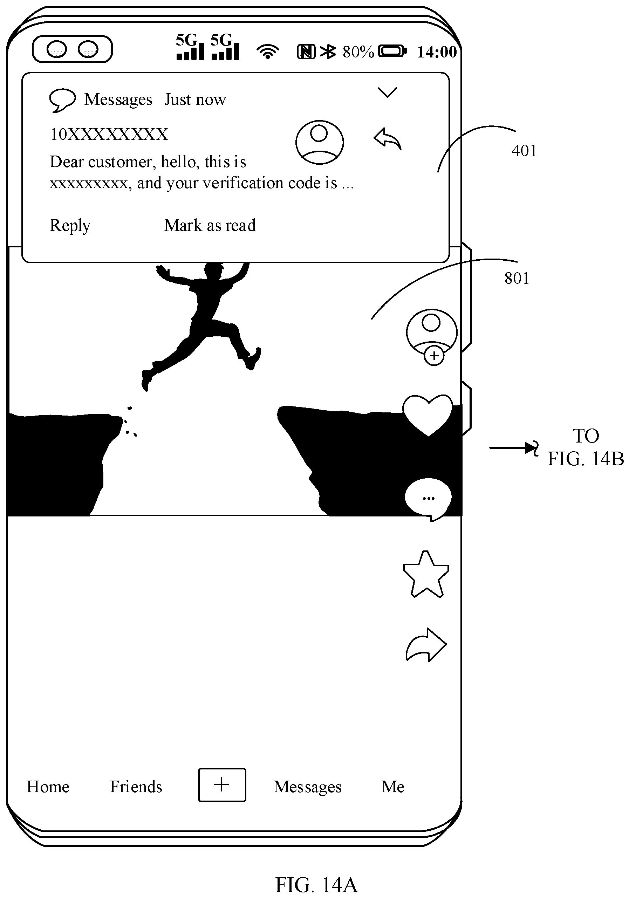

An example in which the banner notification corresponding to the Messages application is received in the video page flipping scenario corresponding to the short video application is used. A priority of a human eye sensing fence corresponding to the Messages application is higher than a priority of a human eye sensing fence corresponding to the short video application. For example, as shown in FIG. 14A, in a process in which the electronic device plays a first video 801 in a video playback interface of the short video application, the electronic device receives a banner notification corresponding to the Messages application, and the electronic device may pop up, on the video playback interface of the short video application, a banner notification 401 that corresponds to the Messages application and that is shown in FIG. 14A.

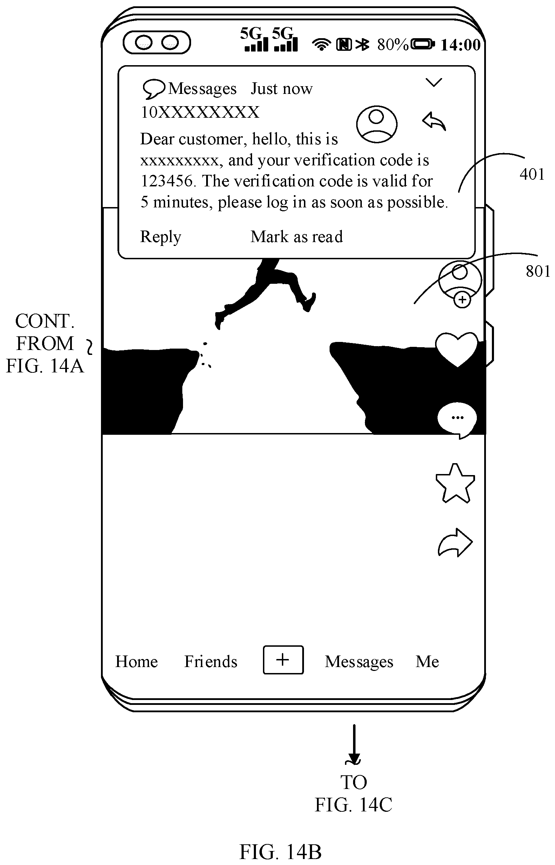

In this case, when a user gazes at a region in which the banner notification 401 corresponding to the Messages application is located, the electronic device may display an interface shown in FIG. 14B, that is, automatically expand the banner notification 401 corresponding to the Messages application, to display all message content of the banner notification 401 corresponding to the Messages application.

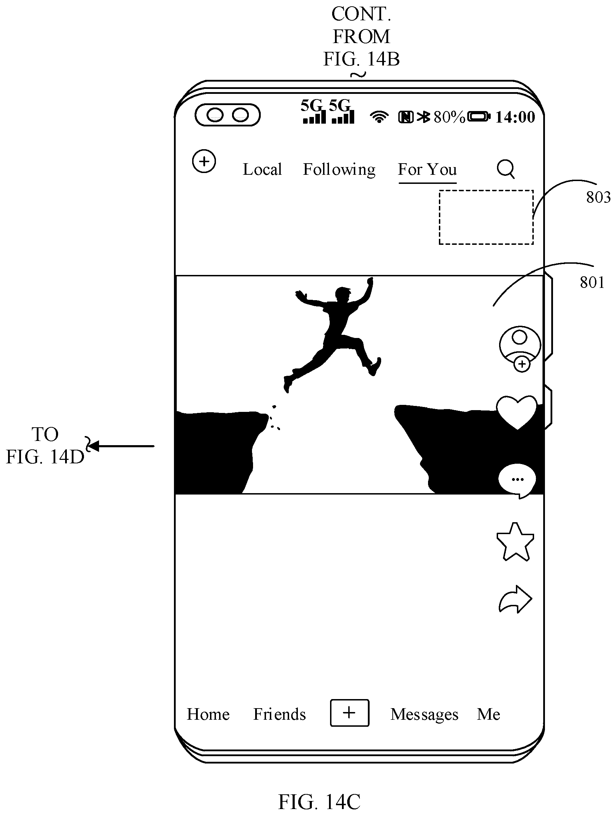

When a human eye gaze location of the user leaves the region in which the banner notification 401 corresponding to the Messages application is located, the electronic device may display a video playback interface that is of the short video application and that is shown in FIG. 14C, that is, automatically collapse the banner notification 401 corresponding to the Messages application.

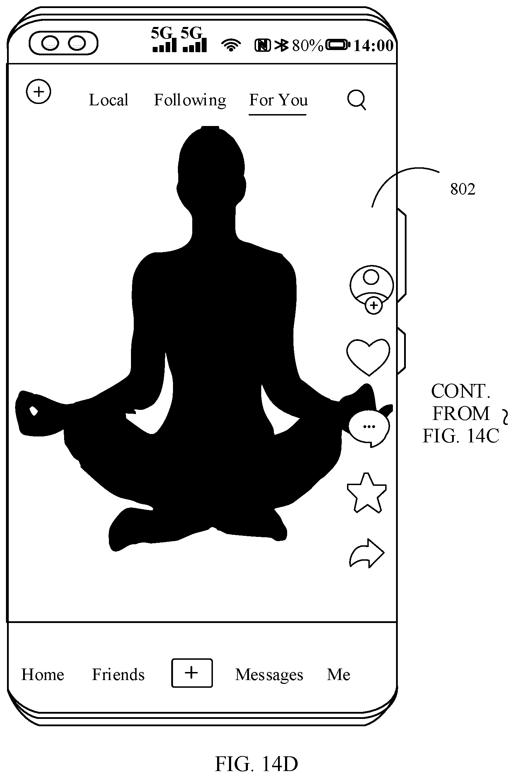

When the user gazes at a first preset region (for example, at a top-right corner 803 in the video playback interface of the short video application) corresponding to the short video application again, the electronic device may switch the currently played first video 801 shown in FIG. 14C to play a second video 802 shown in FIG. 14D, thereby implementing video page flipping.

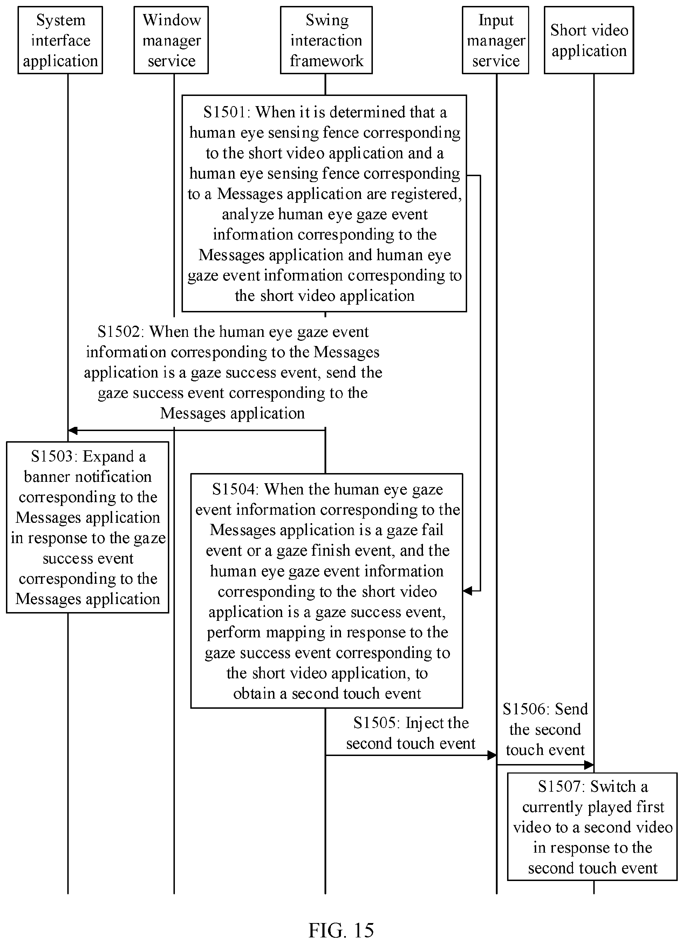

For example, FIG. 15 is a schematic diagram of module interaction for processing of a received banner notification of a Messages application in a video switching scenario of a short video application according to an embodiment of this application. Refer to FIG. 15. An electronic device may include a system interface application, a window manager service, a swing interaction framework, an input manager service, a short video application, and the like. In addition, the electronic device may further include a smart sensing service, a camera service, and the like that are not shown.

As shown in FIG. 15, the following steps may be specifically included.

S1501: When the swing interaction framework determines that a human eye sensing fence corresponding to the short video application and a human eye sensing fence corresponding to a Messages application are registered, the swing interaction framework analyzes human eye gaze event information corresponding to the Messages application and human eye gaze event information corresponding to the short video application.

It should be noted that, before S1501, the electronic device obtains the human eye gaze event information corresponding to the Messages application based on an implementation process of S501 to S508, and the electronic device may also obtain the human eye gaze event information corresponding to the short video application based on an implementation process of S901 to S908.

S1502: When the human eye gaze event information corresponding to the Messages application is a gaze success event, the swing interaction framework sends the gaze success event corresponding to the Messages application to the system interface application.

S1503: The system interface application expands a banner notification corresponding to the Messages application in response to the gaze success event corresponding to the Messages application.

It should be noted that implementation processes of S1502 and S1503 are respectively similar to those of S510 and S511. To avoid repetition, details are not described herein again.

S1504: When the human eye gaze event information corresponding to the Messages application is a gaze fail event or a gaze finish event, and the human eye gaze event information corresponding to the short video application is a gaze success event, the swing interaction framework performs mapping in response to the gaze success event corresponding to the short video application, to obtain a second touch event.

S1505: The swing interaction framework injects the second touch event into the input manager service.

S1506: The input manager service sends the second touch event to the short video application.

S1507: The short video application switches a currently played first video to a second video in response to the second touch event.

It should be noted that implementation processes of S1504 to S1507 are respectively similar to those of S910 to S913. To avoid repetition, details are not described herein again.

That is, in the video page flipping scenario corresponding to the short video application, when the banner notification corresponding to the Messages application is received, whether the human eye gaze event information corresponding to the Messages application is a gaze success event is preferentially determined based on a priority, and when the human eye gaze event information corresponding to the Messages application is a gaze success event, a target operation corresponding to the Messages application is performed preferentially, that is, the banner notification corresponding to the Messages application is expanded. When the human eye gaze event information corresponding to the Messages application is a gaze fail event or a gaze finish event, whether the human eye gaze event information corresponding to the short video application is a gaze success event is determined, and when the human eye gaze event information corresponding to the short video application is a gaze success event, a target operation corresponding to the short video application is performed, that is, the currently played first video is switched to the second video.

Certainly, it may be understood that the banner notification corresponding to the third-party communication application may alternatively be received in the video page flipping scenario corresponding to the short video application. Because a priority of a human eye sensing fence corresponding to the third-party communication application is higher than the priority of the human eye sensing fence corresponding to the short video application, in this case, when human eye gaze event information corresponding to the third-party communication application is a gaze success event, the swing interaction framework triggers a target operation corresponding to the third-party communication application, that is, performs a process of S710 to S713. When the human eye gaze event information corresponding to the third-party communication application is a gaze fail event or a gaze finish event, and the human eye gaze event information corresponding to the short video application is a gaze success event, the swing interaction framework triggers the target operation corresponding to the short video application, that is, performs a process of S910 to S913.

In another scenario, the banner notification corresponding to the Messages application or the third-party communication application may be received in the reading page flipping scenario corresponding to the eBook application. Because a priority of a human eye sensing fence corresponding to the banner notification is higher than a priority of a human eye sensing fence corresponding to the eBook application, in this case, when human eye gaze event information corresponding to the banner notification is a gaze success event, the swing interaction framework triggers a target operation corresponding to the banner notification. When the human eye gaze event information corresponding to the banner notification is a gaze fail event or a gaze finish event, and human eye gaze event information corresponding to the eBook application is a gaze success event, the swing interaction framework triggers a target operation corresponding to the eBook application, that is, performs a process of S1110 to S1113.

In conclusion, it can be learned that when the swing interaction framework determines that at least two human eye sensing fences are registered, and at least one of the human eye sensing fences is a human eye sensing fence corresponding to the banner notification, the swing interaction framework triggers a corresponding target operation based on priorities of the at least two human eye sensing fences and corresponding human eye gaze event information]

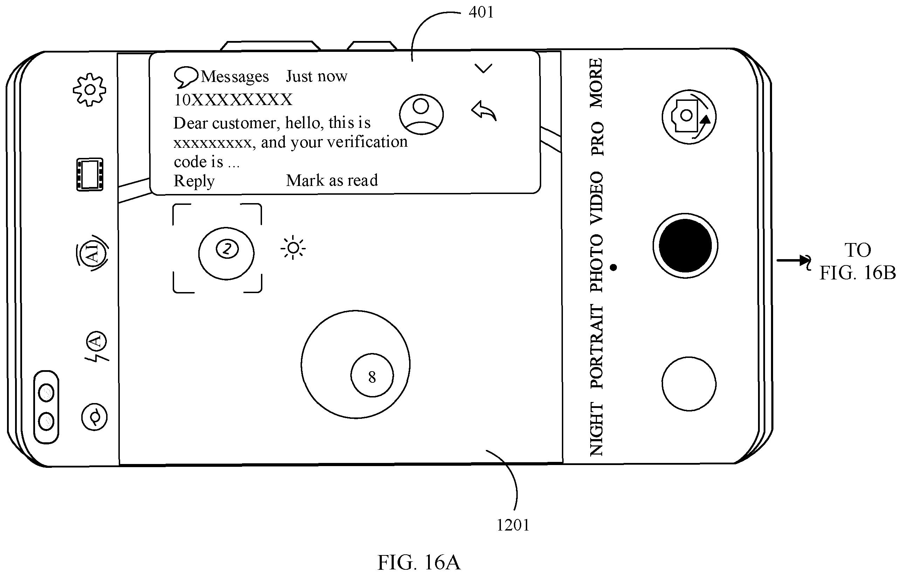

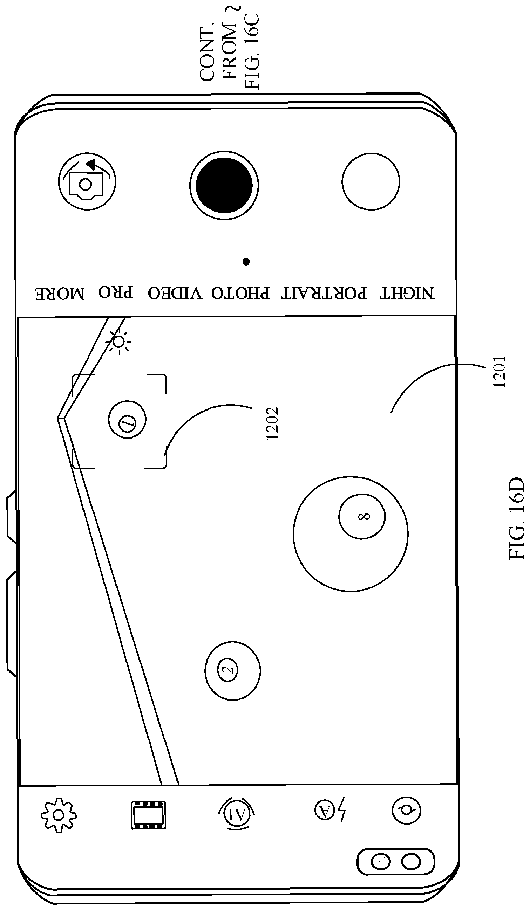

An example in which the banner notification corresponding to the Messages application is received in the camera focus tracking scenario is used. A priority of a human eye sensing fence corresponding to the Messages application is higher than a priority of a human eye sensing fence corresponding to the Camera application. For example, as shown in FIG. 16A, in a process in which the electronic device performs focus tracking processing in a viewfinder frame 1201 in a shooting interface, the electronic device receives the banner notification corresponding to the Messages application, and the electronic device may pop up, on the shooting interface, a banner notification 401 that is of the Messages application and that is shown in FIG. 16A.

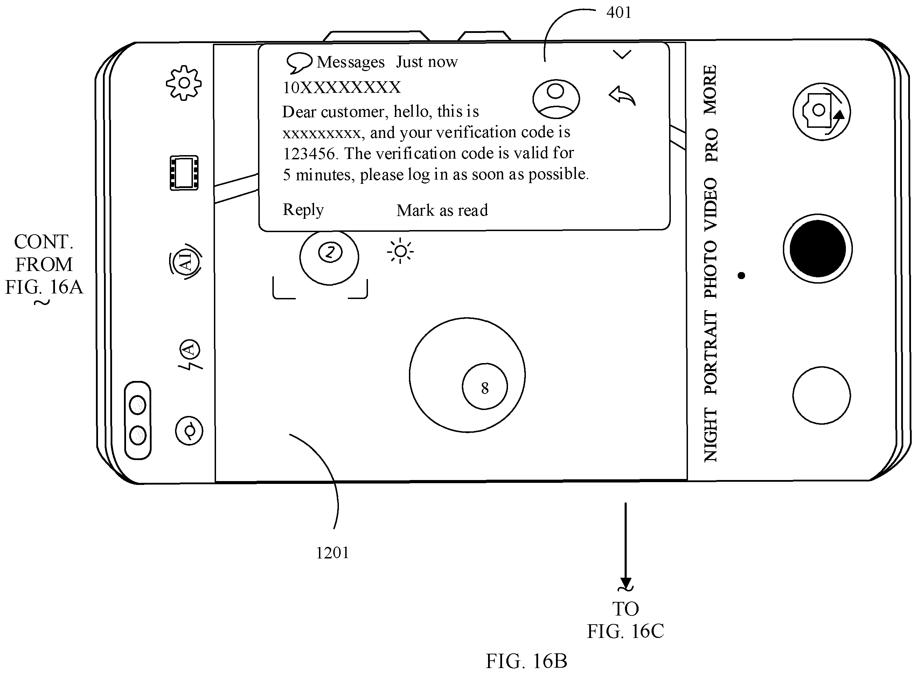

In this case, when a user gazes at a region in which the banner notification 401 corresponding to the Messages application is located, the electronic device may display an interface shown in FIG. 16B, that is, automatically expand the banner notification 401 corresponding to the Messages application, to display all message content of the banner notification 401 corresponding to the Messages application.

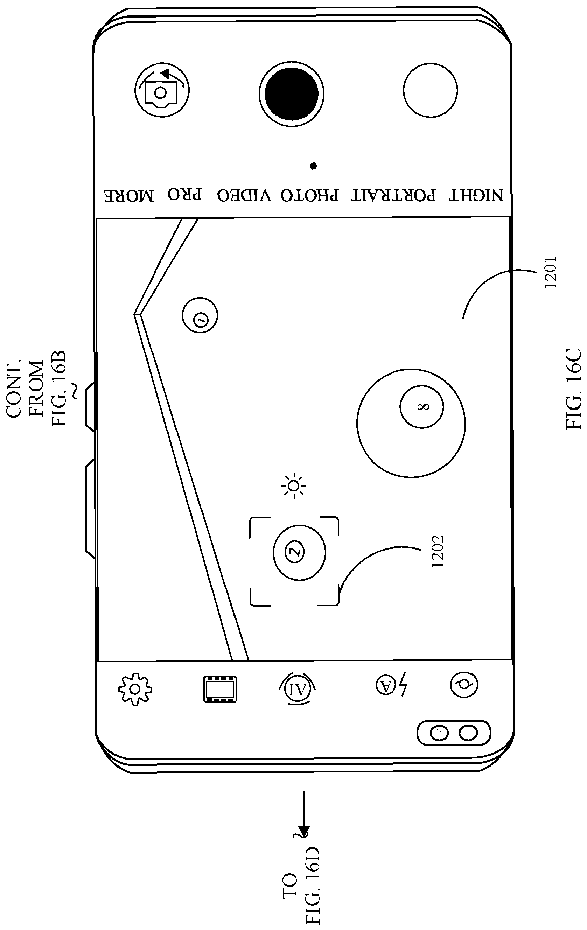

When a human eye gaze location of the user leaves the region in which the banner notification 401 corresponding to the Messages application is located, the electronic device may display a shooting interface shown in FIG. 16C, that is, automatically collapse the banner notification 401 corresponding to the Messages application.

When the human eye gaze location of the user moves from a location in which a billiard numbered 2 is located to a location in which a billiard numbered 1 is located, the electronic device may switch a focus again, to focus on the billiard numbered 1 in a focus frame 1202, so that an image in the focus frame 1202 is clearer.

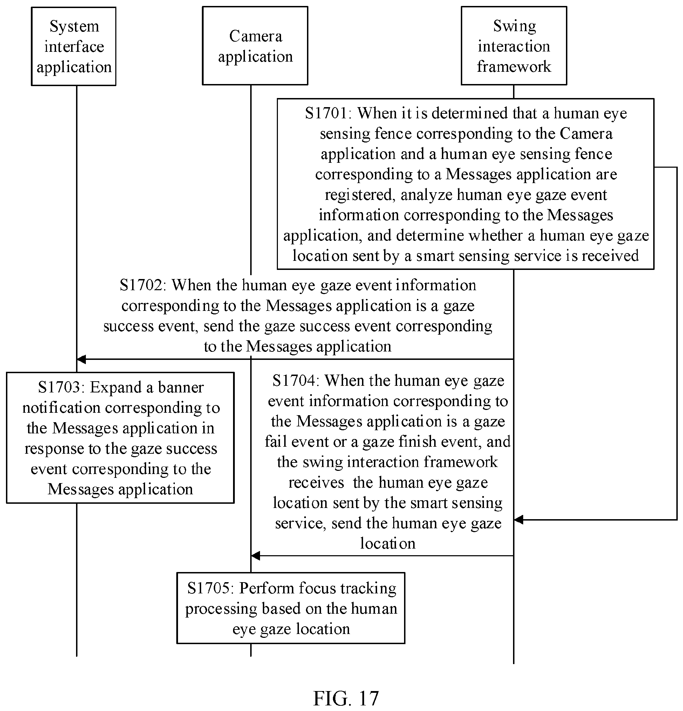

For example, FIG. 17 is a schematic diagram of module interaction for processing of a received banner notification of a Messages application in a camera focus tracking scenario according to an embodiment of this application. Refer to FIG. 17. An electronic device may include a system interface application, a Camera application, and a swing interaction framework. In addition, the electronic device further includes a smart sensing service, a camera service, and the like that are not shown.

As shown in FIG. 17, the following steps may be specifically included.

S1701: When the swing interaction framework determines that a human eye sensing fence corresponding to the Camera application and a human eye sensing fence corresponding to a Messages application are registered, the swing interaction framework analyzes human eye gaze event information corresponding to the Messages application, and determines whether a human eye gaze location sent by the smart sensing service is received.

It should be noted that, before S1701, the electronic device obtains the human eye gaze event information corresponding to the Messages application based on an implementation process of S501 to S508, and the electronic device may also obtain, based on an implementation process of S1301 to S1309, the human eye gaze location sent by the smart sensing service.

S1702: When the human eye gaze event information corresponding to the Messages application is a gaze success event, the swing interaction framework sends the gaze success event corresponding to the Messages application to the system interface application.

S1703: The system interface application expands a banner notification corresponding to the Messages application in response to the gaze success event corresponding to the Messages application.

It should be noted that implementation processes of S1702 and S1703 are respectively similar to those of S510 and S511. To avoid repetition, details are not described herein again.

S1704: When the human eye gaze event information corresponding to the Messages application is a gaze fail event or a gaze finish event, and the swing interaction framework receives the human eye gaze location sent by the smart sensing service, the swing interaction framework sends the human eye gaze location to the Camera application.

S1705: The Camera application performs focus tracking processing based on the human eye gaze location.

It should be noted that implementation processes of S1704 and S1705 are respectively similar to those of S1311 and S1312. To avoid repetition, details are not described herein again.

That is, in the camera focus tracking scenario, when the banner notification corresponding to the Messages application is received, whether the human eye gaze event information corresponding to the Messages application is a gaze success event is preferentially determined based on a priority, and when the human eye gaze event information corresponding to the Messages application is a gaze success event, a target operation corresponding to the Messages application is performed preferentially, that is, the banner notification corresponding to the Messages application is expanded. When the human eye gaze event information corresponding to the Messages application is a gaze fail event or a gaze finish event, whether the human eye gaze location sent by the smart sensing service is received is determined, and when the swing interaction framework receives the human eye gaze location sent by the smart sensing service, focus tracking processing is performed based on the human eye gaze location.

Certainly, it may be understood that the banner notification corresponding to the third-party communication application may alternatively be received in the camera focus tracking scenario. Because a priority of a human eye sensing fence corresponding to the third-party communication application is higher than the priority of the human eye sensing fence corresponding to the Camera application, in this case, when human eye gaze event information corresponding to the third-party communication application is a gaze success event, the swing interaction framework triggers a target operation corresponding to the third-party communication application, that is, performs a process of S710 to S713. When the human eye gaze event information corresponding to the third-party communication application is a gaze fail event or a gaze finish event, and the swing interaction framework receives the human eye gaze location sent by the smart sensing service, the swing interaction framework performs a step of sending the human eye gaze location to the Camera application and performing focus tracking processing based on the human eye gaze location by the Camera application.

In conclusion, it can be learned that when the swing interaction framework determines that at least the human eye sensing fence corresponding to the Camera application and the human eye sensing fence corresponding to the banner notification are registered, the swing interaction framework triggers a corresponding target operation based on priorities of the human eye sensing fence corresponding to the Camera application and the human eye sensing fence corresponding to the banner notification, the human eye gaze event information corresponding to the banner notification, and whether the swing interaction framework receives the human eye gaze location sent by the smart sensing service.

The target operation is a focus tracking operation for the Camera application or a display operation corresponding to the banner notification. When the banner notification is a banner notification corresponding to the Messages application, the display operation corresponding to the banner notification is an operation of expanding the banner notification corresponding to the Messages application. When the banner notification is a banner notification corresponding to the third-party communication application, the display operation corresponding to the banner notification is an operation of displaying detailed information of the banner notification corresponding to the third-party communication application.

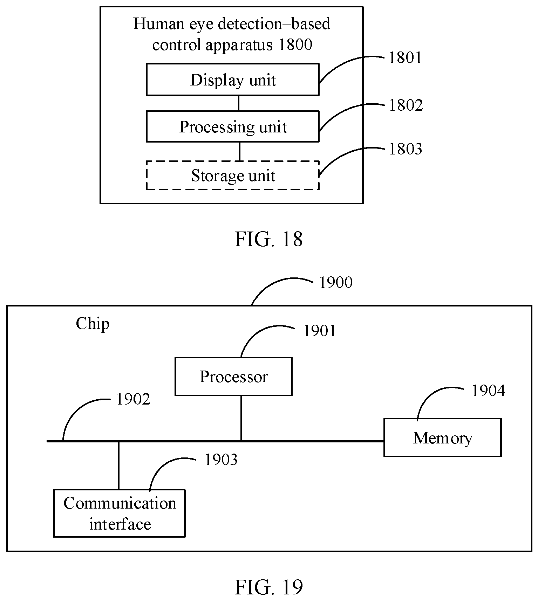

The foregoing describes the human eye detection-based control method provided in the embodiments of this application with reference to FIG. 4A and FIG. 4B to FIG. 17. The following describes an apparatus for performing the foregoing method in the embodiments of this application. FIG. 18 is a schematic diagram of a structure of a human eye detection-based control apparatus according to an embodiment of this application. The human eye detection-based control apparatus may be an electronic device in the embodiments of this application or a chip or chip system in the electronic device.

As shown in FIG. 18, the human eye detection-based control apparatus 1800 includes a display unit 1801 and a processing unit 1802. The display unit 1801 is configured to support the human eye detection-based control apparatus 1800 to perform the foregoing display steps. The processing unit 1802 is configured to support the human eye detection-based control apparatus 1800 to perform the foregoing processing steps.

In a possible implementation, the human eye detection-based control apparatus 1800 further includes a storage unit 1803. The storage unit 1803 and the processing unit 1802 are connected to each other by using a line. The storage unit 1803 may include one or more memories, and the memory may be a component configured to store a program or data in one or more devices or circuits. The storage unit 1803 may exist independently, and is connected to the processing unit 1802 by using a communication bus. Alternatively, the storage unit 1803 may be integrated together with the processing unit 1802.

The storage unit 1803 may store computer-executable instructions of the method in the electronic device, so that the processing unit 1802 performs the method in the foregoing embodiments. The storage unit 1803 may be a register, a cache, a random access memory (random access memory, RAM), or the like, and the storage unit 1803 may be integrated together with the processing unit 1802. The storage unit 1803 may be a read-only memory (read-only memory, ROM) or another type of static storage device that can store static information and instructions. The storage unit 1803 may be independent of the processing unit 1802.

FIG. 19 is a schematic diagram of a structure of a chip according to an embodiment of this application. As shown in FIG. 19, a chip 1900 includes one or more than two (including two) processors 1901, a communication line 1902, and a communication interface 1903. Optionally, the chip 1900 further includes a memory 1904.

In some implementations, the memory 1904 stores the following elements: an executable module or a data structure, or a subset thereof, or a superset thereof.

The method described in the embodiments of this application may be applied to the processor 1901 or implemented by the processor 1901. The processor 1901 may be an integrated circuit chip having a capability of processing a signal. During implementation, the steps of the method may be completed by using an integrated logic circuit of hardware in the processor 1901 or by using instructions in a form of software. The processor 1901 may be a general-purpose processor (for example, a microprocessor or a conventional processor), a digital signal processor, an application-specific integrated circuit (application-specific integrated circuit, ASIC), a field-programmable gate array (field-programmable gate array, FPGA) or another programmable logic device, a discrete gate, or a transistor logic device or a discrete hardware component. The processor 1901 may implement or perform the methods, steps, and logical block diagrams disclosed in the embodiments of this application.

The steps of the method disclosed with reference to the embodiments of this application may be directly performed by a hardware decoding processor, or performed by a combination of hardware in a decoding processor and a software module. The software module may be located in a mature storage medium in the art, such as a random access memory, a read-only memory, a programmable read-only memory, or an electrically erasable programmable read-only memory (electrically erasable programmable read-only memory, EEPROM). The storage medium is located in the memory 1904, and the processor 1901 reads information in the memory 1904 and completes the steps of the foregoing method in combination with hardware in the processor.

The processor 1901, the memory 1904, and the communication interface 1903 may communicate with each other by using the communication line 1902.

In the foregoing embodiments, the instructions stored in the memory for execution by the processor may be implemented in a form of a computer program product. The computer program product may be written in the memory in advance, or may be downloaded and installed in the memory in a form of software.

An embodiment of this application further provides a computer program product, including one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) manner or a wireless (for example, infrared, radio, or microwave) manner. The computer-readable storage medium may be any available medium on which the computer can perform storage, or a data storage device such as a server or a data center integrating one or more available media. For example, the available medium may include a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like.

An embodiment of this application provides an electronic device. The electronic device includes a memory and a processor. The memory is configured to store a computer program, and the processor is configured to perform the computer program, to perform the foregoing human eye detection-based control method.

An embodiment of this application further provides a computer-readable storage medium. The method described in the foregoing embodiments may be completely or partially implemented by using software, hardware, firmware, or any combination thereof. The computer-readable medium may include a computer storage medium and a communication medium, and may further include any medium that enables a computer program to be transmitted from a place to another place. The storage medium may be any target medium accessible by a computer.

In a possible design, the computer-readable medium may include a compact disc read-only memory (compact disc read-only memory, CD-ROM), a RAM, a ROM, an EEPROM, or another optical disc memory; and the computer-readable medium may include a magnetic disk memory or another magnetic disk storage device. In addition, any connection line may also be appropriately referred to as a computer-readable medium. For example, if software is transmitted from a website, a server, or another remote source by using a coaxial cable, an optical fiber cable, a twisted pair, a DSL, or wireless technologies (for example, infrared, radio, and microwave), the coaxial cable, the optical fiber cable, the twisted pair, the DSL, or the wireless technologies such as infrared, radio, and microwave are included in the definition of the medium. As used herein, a magnetic disk and an optical disc include a compact disc (CD), a laser disc, an optical disc, a DVD, a floppy disk, and a Blu-ray disc. The magnetic disk usually reproduces data in a magnetic manner, and the optical disc reproduces data optically by using laser.

The embodiments of this application are described with reference to the flowcharts and/or block diagrams of the method, the device (system), and the computer program product according to the embodiments of this application. It should be understood that computer program instructions may be used to implement each procedure and/or each block in the flowcharts and/or the block diagrams and a combination of procedures and/or blocks in the flowcharts and/or the block diagrams. These computer program instructions may be provided to a general-purpose computer, a dedicated computer, an embedded processor, or a processing unit of another programmable data processing device to generate a machine, so that the instructions executed by the computer or the processing unit of the another programmable data processing device generate an apparatus for implementing a specific function in one or more procedures in the flowcharts and/or in one or more blocks in the block diagrams.

The objectives, technical solutions, and beneficial effects of this application are further described in detail in the foregoing specific implementations. It should be understood that the foregoing descriptions are merely specific implementations of this application, but are not intended to limit the protection scope of this application. Any modification, equivalent replacement, or improvement made based on the technical solutions in this application shall fall within the protection scope of this application.

## Claims

1. A human eye detection-based control method, applied to an electronic device, wherein the electronic device comprises a camera service, a swing interaction framework, and a smart sensing service, and the method comprises:
registering, by the swing interaction framework, a human eye sensing fence with the smart sensing service when triggering detection for a human eye gaze location;
sending, by the smart sensing service, a registration request to the camera service, wherein the registration request is used to start the detection for the human eye gaze location;
sending, by the camera service, the obtained human eye gaze location to the smart sensing service in response to the registration request;
determining, by the smart sensing service, human eye gaze event information based on the human eye gaze location and the human eye sensing fence;
sending, by the smart sensing service, the human eye gaze event information to the swing interaction framework; and
triggering, by the swing interaction framework, a corresponding target operation when the human eye gaze event information is a gaze success event; and
the target operation comprises any one of the following: expanding a banner notification corresponding to a Messages application, displaying detailed information of a banner notification corresponding to a third-party communication application, switching between videos corresponding to a short video application, and flipping a reading page corresponding to an eBook application.

2. The method according to claim 1, wherein the electronic device further comprises a system interface application, and the triggering detection for a human eye gaze location comprises:
when the system interface application receives a banner notification corresponding to a Messages application, and the banner notification is an expandable banner notification, registering, by the system interface application, a human eye sensing fence corresponding to the Messages application with the swing interaction framework, to trigger the detection for the human eye gaze location.

3. The method according to claim 2, before the registering, by the system interface application, a human eye sensing fence corresponding to the Messages application with the swing interaction framework, further comprising:
determining, by the system interface application, whether the electronic device supports a human eye detection function;
when the electronic device supports the human eye detection function, determining, by the system interface application, whether a human eye detection switch corresponding to the Messages application is enabled; and
when the human eye detection switch corresponding to the Messages application is enabled, performing, by the system interface application, the step of registering the human eye sensing fence corresponding to the Messages application with the swing interaction framework.

4. The method according to claim 2, wherein the triggering, by the swing interaction framework, a corresponding target operation when the human eye gaze event information is a gaze success event comprises:
when the human eye gaze event information is a gaze success event, determining, by the swing interaction framework, whether a use scenario of the electronic device belongs to an event response scenario;
when the use scenario of the electronic device belongs to the event response scenario, sending, by the swing interaction framework, the gaze success event to the system interface application; and
expanding, by the system interface application, the banner notification corresponding to the Messages application in response to the gaze success event.

5. The method according to claim 1, wherein the electronic device further comprises a system interface application and a third-party communication application, and the triggering detection for a human eye gaze location comprises:
when the system interface application receives a banner notification corresponding to the third-party communication application, registering, by the system interface application, a human eye sensing fence corresponding to the third-party communication application with the swing interaction framework, to trigger the detection for the human eye gaze location.

6. The method according to claim 5, before the registering, by the system interface application, a human eye sensing fence corresponding to the third-party communication application with the swing interaction framework, further comprising:
determining, by the system interface application, whether the electronic device supports a human eye detection function;
when the electronic device supports the human eye detection function, determining, by the system interface application, whether a human eye detection switch corresponding to the third-party communication application is enabled; and
when the human eye detection switch corresponding to the third-party communication application is enabled, performing, by the system interface application, the step of registering the human eye sensing fence corresponding to the third-party communication application with the swing interaction framework.

7. The method according to claim 5, wherein the electronic device further comprises an input manager service, and the triggering, by the swing interaction framework, a corresponding target operation when the human eye gaze event information is a gaze success event comprises:
when the human eye gaze event information is a gaze success event, determining, by the swing interaction framework, whether a use scenario of the electronic device belongs to an event response scenario;
when the use scenario of the electronic device belongs to the event response scenario, performing, by the swing interaction framework, mapping in response to the gaze success event, to obtain a first touch event;
injecting, by the swing interaction framework, the first touch event into the input manager service;
sending, by the input manager service, the first touch event to the third-party communication application; and
displaying, by the third-party communication application, detailed information of the banner notification corresponding to the third-party communication application in response to the first touch event.

8. The method according to claim 1, wherein the electronic device further comprises a window manager service and a short video application, and the triggering detection for a human eye gaze location comprises:
when the window manager service senses that the short video application runs in a foreground, sending, by the window manager service, application information corresponding to the short video application to the swing interaction framework, to trigger the detection for the human eye gaze location.

9. The method according to claim 8, before the registering, by the swing interaction framework, a human eye sensing fence with the smart sensing service, further comprising:
determining, by the swing interaction framework, whether the electronic device supports a human eye detection function;
when the electronic device supports the human eye detection function, determining, by the swing interaction framework, whether a human eye detection switch corresponding to the short video application is enabled; and
when the human eye detection switch corresponding to the short video application is enabled, performing, by the swing interaction framework, the step of registering the human eye sensing fence with the smart sensing service, wherein the registered human eye sensing fence is a human eye sensing fence corresponding to the short video application.

10. The method according to claim 8, wherein the electronic device further comprises an input manager service, and the triggering, by the swing interaction framework, a corresponding target operation when the human eye gaze event information is a gaze success event comprises:
when the human eye gaze event information is a gaze success event, determining, by the swing interaction framework, whether a use scenario of the electronic device belongs to an event response scenario;
when the use scenario of the electronic device belongs to the event response scenario, performing, by the swing interaction framework, mapping in response to the gaze success event, to obtain a second touch event;
injecting, by the swing interaction framework, the second touch event into the input manager service;
sending, by the input manager service, the second touch event to the short video application; and
switching, by the short video application, a currently played first video to a second video in response to the second touch event.

11. The method according to claim 1, wherein the electronic device further comprises a window manager service and an eBook application, and the triggering detection for a human eye gaze location comprises:
when the window manager service senses that the eBook application runs in a foreground, sending, by the window manager service, application information corresponding to the eBook application to the swing interaction framework, to trigger the detection for the human eye gaze location.

12. The method according to claim 11, before the registering, by the swing interaction framework, a human eye sensing fence with the smart sensing service, further comprising:
determining, by the swing interaction framework, whether the electronic device supports a human eye detection function;
when the electronic device supports the human eye detection function, determining, by the swing interaction framework, whether a human eye detection switch corresponding to the eBook application is enabled; and
when the human eye detection switch corresponding to the eBook application is enabled, performing, by the swing interaction framework, the step of registering the human eye sensing fence with the smart sensing service, wherein the registered human eye sensing fence is a human eye sensing fence corresponding to the eBook application.

13. The method according to claim 11, wherein the electronic device further comprises an input manager service, and the triggering, by the swing interaction framework, a corresponding target operation when the human eye gaze event information is a gaze success event comprises:
when the human eye gaze event information is a gaze success event, determining, by the swing interaction framework, whether a use scenario of the electronic device belongs to an event response scenario;
when the use scenario of the electronic device belongs to the event response scenario, performing, by the swing interaction framework, mapping in response to the gaze success event, to obtain a third touch event;
injecting, by the swing interaction framework, the third touch event into the input manager service;
sending, by the input manager service, the third touch event to the eBook application; and
switching, by the eBook application, a currently displayed first reading page to a second reading page in response to the third touch event.

14. The method according to any one of claims 1 to 13, wherein the human eye sensing fence comprises a first preset region, first preset duration, and second preset duration, and the determining, by the smart sensing service, human eye gaze event information based on the human eye gaze location and the human eye sensing fence comprises
within the second preset duration, when the smart sensing service determines that the human eye gaze location is located in the first preset region, and duration in which the human eye gaze location remains in the first preset region reaches the first preset duration, determining, by the smart sensing service, that the human eye gaze event information is the gaze success event.

15. The method according to claim 4, wherein the human eye sensing fence comprises a first preset region, and after the expanding, by the system interface application, the banner notification corresponding to the Messages application in response to the gaze success event, the method further comprises:
when the smart sensing service determines that the human eye gaze location leaves the first preset region, sending, by the smart sensing service, a gaze finish event to the swing interaction framework;
sending, by the swing interaction framework, the gaze finish event to the system interface application; and
collapsing, by the system interface application, the banner notification corresponding to the Messages application in response to the gaze finish event.

16. The method according to claim 1, wherein the triggering, by the swing interaction framework, a corresponding target operation comprises:
when the swing interaction framework determines that at least two human eye sensing fences are registered, and at least one of the human eye sensing fences is a human eye sensing fence corresponding to the banner notification, triggering, by the swing interaction framework, the corresponding target operation based on priorities of the at least two human eye sensing fences and corresponding human eye gaze event information; and
the banner notification is a banner notification corresponding to the Messages application or a banner notification corresponding to the third-party communication application.

17. The method according to claim 16, wherein the priority of the human eye sensing fence corresponding to the banner notification is higher than priority of a human eye sensing fence corresponding to the short video application, and the triggering, by the swing interaction framework, the corresponding target operation based on priorities of the at least two human eye sensing fences and corresponding human eye gaze event information comprises:
when the human eye gaze event information corresponding to the banner notification is a gaze success event, triggering, by the swing interaction framework, a target operation corresponding to the banner notification; and
when the human eye gaze event information corresponding to the banner notification is a gaze fail event or a gaze finish event, and human eye gaze event information corresponding to the short video application is a gaze success event, triggering, by the swing interaction framework, a target operation corresponding to the short video application.

18. The method according to claim 16, wherein the priority of the human eye sensing fence corresponding to the banner notification is higher than priority of a human eye sensing fence corresponding to the eBook application, and the triggering, by the swing interaction framework, the corresponding target operation based on priorities of the at least two human eye sensing fences and corresponding human eye gaze event information comprises:
when the human eye gaze event information corresponding to the banner notification is a gaze success event, triggering, by the swing interaction framework, a target operation corresponding to the banner notification; and
when the human eye gaze event information corresponding to the banner notification is a gaze fail event or a gaze finish event, and human eye gaze event information corresponding to the eBook application is a gaze success event, triggering, by the swing interaction framework, a target operation corresponding to the eBook application.

19. An electronic device, comprising a memory and a processor, wherein the memory is configured to store a computer program, and the processor is configured to invoke the computer program, to perform the human eye detection-based control method according to any one of claims 1 to 18.

20. A computer-readable storage medium, wherein the computer-readable storage medium stores a computer program or instructions, and when the computer program or the instructions are run, the human eye detection-based control method according to any one of claims 1 to 18 is implemented.

21. A computer program product, comprising a computer program, wherein when the computer program is run, a computer is enabled to perform the human eye detection-based control method according to any one of claims 1 to 18.
